# EUROPEAN PATENT SPECIFICATION

(11) **EP 4 358 597 B1**
(45) Date of publication and mention of the grant of the patent: **22.10.2025**
(21) Application number: 22844882.5
(22) Date of filing: 01.04.2022
(51) Int. Cl.: H04W 52/02, H04W 4/06, H04L 5/00

(54) **METHOD AND APPARATUS FOR PROCESSING BROADCAST INFORMATION**
VERFAHREN UND VORRICHTUNG ZUR VERARBEITUNG VON RUNDFUNKINFORMATIONEN
PROCÉDÉ ET APPAREIL DE TRAITEMENT D'INFORMATIONS DE DIFFUSION

(30) Priority: 21.07.2021 CN 202110827594
(43) Date of publication of application: 24.04.2024
(73) Proprietor: Huawei Technologies Co., Ltd., Shenzhen, Guangdong 518129 (CN)
(72) Inventor: HE, Qingchun, Shenzhen, Guangdong 518129 (CN); GAO, Lei, Shenzhen, Guangdong 518129 (CN); CHENG, Xingqing, Shenzhen, Guangdong 518129 (CN)
(74) Representative: Pfenning, Meinig & Partner mbB
(86) International application number: PCT/CN2022/084815
(87) International publication number: WO 2023/000710

(56) References cited:
- WO-A1-2018/148830
- CN-A- 103 002 515
- CN-A- 103 004 215
- CN-A- 105 303 408
- CN-A- 108 494 610
- US-A1- 2004 229 629

## Description

### TECHNICAL FIELD

This application relates to the communication field, and further, to a broadcast information processing method and apparatus, a computer-readable storage medium and a chip.

### BACKGROUND

Short-range communication plays an important role in people's daily life. For example, short-range communication is required in fields such as smart terminals, smart homes, smart manufacturing, and smart vehicles. In wireless short-range communication, a broadcast message includes two parts: a basic broadcast frame and an extended broadcast frame (or an extended data frame). A broadcast receiver receives the basic broadcast frame, and receives the extended broadcast frame (or the extended data frame) based on information that is about a frequency, a clock, and a physical layer (Physical Layer, PHY) and that is indicated in the basic broadcast frame. Further, the broadcast receiver initiates a scanning request and/or a connection request in a corresponding window based on indication information in the extended broadcast frame (or the extended data frame). Further, the broadcast receiver receives a scanning response frame, and/or the broadcast receiver completes a connection with a broadcast sender, to complete a communication procedure.

US 2004/229629 A1 discloses a method for a terminal receiving a multimedia broadcast/multicast service (MBMS) service. In the method, a terminal newly introduced in a cell receives a control message, such as an MBMS notification message, from a UMTS terrestrial radio access network (UTRAN). The control message includes the service ID of a particular service provided in the cell, a connection-required indicator and state information associated with the particular service. The terminal compares the service ID in the control message to the identification of the desired service to determine if the desired service, for example an MBMS service, is available in the cell.

### SUMMARY

The invention is set out in the appended set of claims. This application provides a broadcast information processing method. Indication information is added to a basic broadcast frame sent by a second device to a first device, so that the first device determines, based on the indication information, whether to receive an extended broadcast frame or a scanning response frame. A flexible receiving method is provided, so that the first device determines, based on the indication information and a requirement of the first device, whether to receive subsequent broadcast content. Further, when the extended broadcast frame or the scanning response frame is not received, power consumption of the first device in a broadcast information processing process is reduced. In addition, the first device parses, at a physical layer, the indication information in a frame header of the basic broadcast frame, so that power consumption of the first device in a parsing process is reduced.

According to a first aspect, a broadcast information processing communication method is provided, including: A first device receives a basic broadcast frame sent by a second device; the first device parses the basic broadcast frame to obtain indication information, where the indication information includes at least one of the following: first indication information, where the first indication information indicates whether content of an extended broadcast frame changes; second indication information, where the second indication information indicates a broadcast type; and third indication information, where the third indication information indicates whether content of a scanning response frame changes; and the first device determines, based on the indication information, whether to receive the extended broadcast frame. The first device may be a broadcast receiver, and the second device may be a broadcast sender. The basic broadcast frame may alternatively be a basic broadcast physical channel protocol data unit (Protocol Data Unit, PDU), and the extended broadcast frame may alternatively be an extended broadcast physical channel PDU.

According to the broadcast information processing communication method provided in this application, the indication information is added to the basic broadcast frame sent by the second device to the first device, so that the first device determines, based on the indication information, whether to receive the extended broadcast frame or the scanning response frame. A flexible receiving method is provided, so that the first device determines, based on the indication information and a requirement of the first device, whether to receive subsequent broadcast content. Further, when the extended broadcast frame or the scanning response frame is not received, power consumption of the first device in a broadcast information processing process is reduced. In addition, the first device parses, at a physical layer, the indication information in the basic broadcast frame, so that power consumption of the first device in a parsing process is reduced.

With reference to the first aspect, in some implementations of the first aspect, the indication information is included in a physical layer frame header of the basic broadcast frame or a physical layer payload header of the basic broadcast frame. The physical layer frame header of the basic broadcast frame may further include physical layer control information such as encoding and decoding of the basic broadcast frame and new transmission and old transmission indications. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. The first device parses the physical layer frame header of the basic broadcast frame or the physical layer payload header of the basic broadcast frame, and obtains the indication information from the physical layer frame header of the basic broadcast frame or the physical layer payload header of the basic broadcast frame. The indication information is parsed in the physical layer frame header, so that power consumption of the first device in the parsing process is reduced.

With reference to the first aspect, in some implementations of the first aspect, the indication information may include one of the first indication information, the second indication information, and the third indication information.

Optionally, the indication information may include the first indication information. If the first indication information indicates that the content of the extended broadcast frame changes, the first device receives the extended broadcast frame. If the first indication information indicates that the content of the extended broadcast frame does not change, the first device does not receive the extended broadcast frame. Further, the first device initiates a scanning request or a connection request based on content of a currently received extended broadcast frame or content of a previously buffered extended broadcast frame (when the extended broadcast frame is not received this time, or the content of the currently extended broadcast frame is the same as the content of the previously received and buffered extended broadcast frame), and further receives the scanning response frame or establishes a connection.

Optionally, the indication information may include the second indication information. The broadcast type indicated by the second indication information may include: scannable, connectable, unscannable, or disconnectable. Alternatively, the broadcast type may be a combination of the four types. If the first device determines that the broadcast type is a target type, the first device receives the extended broadcast frame. Further, the first device initiates a scanning request or a connection request based on the content of the extended broadcast frame. Further, the first device receives the scanning response frame or establishes a connection to the second device. If the first device determines that the broadcast type is not a target type, the first device does not receive the extended broadcast frame. Further, the first device does not initiate a scanning request or a connection request. Further, the first device does not receive the scanning response frame or does not establish a connection.

Optionally, the indication information may include the third indication information. If the third indication information indicates that the content of the scanning response frame does not change, the first device does not receive the extended broadcast frame. Further, the first device does not initiate a scanning request. Further, the first device does not receive the scanning response frame. If the third indication information indicates that the content of the scanning response frame changes, the first device receives the extended broadcast frame. Further, the first device initiates a scanning request based on the content of the extended broadcast frame. Further, the first device receives the scanning response frame.

Optionally, the third indication information may be included in a frame header or a payload header of the extended request frame. The first device receives the basic broadcast frame, and receives the extended broadcast frame based on the content of the basic broadcast frame. If the third indication information included in the extended broadcast frame indicates that the content of the scanning response frame changes, the first device initiates the scanning request based on the content of the extended broadcast frame. Further, the first device receives the scanning response frame. If the third indication information indicates that the content of the scanning response frame does not change, the first device does not initiate the scanning request, or the first device initiates the scanning request based on the content of the extended broadcast frame, and the first device does not receive the scanning response frame.

With reference to the first aspect, in some implementations of the first aspect, the indication information may include any two of the first indication information, the second indication information, and the third indication information.

Optionally, the indication information may include the first indication information and the second indication information. If the first device determines, based on the second indication information, that the broadcast type is not the target type, regardless of whether the content of the extended broadcast frame indicated by the first indication information changes, the first device does not receive the extended broadcast frame. Further, the first device does not initiate the scanning request or the connection request. Further, the first device does not receive the scanning response frame or does not establish the connection. If the first device determines, based on the second indication information, that the broadcast type is a target type, the first device determines, based on the first indication information, whether to receive the extended broadcast frame. If the first indication information indicates that the content of the extended broadcast frame changes, the first device receives the extended broadcast frame. If the first indication information indicates that the content of the extended broadcast frame does not change, the first device does not receive the extended broadcast frame. Further, the first device initiates the scanning request based on the content of the currently received extended broadcast frame or the content of the previously buffered extended broadcast frame (when the extended broadcast frame is not received this time, or the content of the extended broadcast frame is the same as the content of the previously received and buffered extended broadcast frame). Further, the first device receives the scanning response frame or establish the connection.

Optionally, the indication information may include the first indication information and the third indication information. If the first device determines, based on the third indication information, that the content of the scanning response frame does not change, regardless of whether the content of the extended broadcast frame indicated by the first indication information changes, the first device does not receive the extended broadcast frame. Further, the first device does not initiate the scanning request. Further, the first device does not receive the scanning response frame. If the first device determines, based on the third indication information, that the content of the scanning response frame changes, the first device determines, based on the first indication information, whether to receive the extended broadcast frame. If the first indication information indicates that the content of the extended broadcast frame changes, the first device receives the extended broadcast frame. If the first indication information indicates that the content of the extended broadcast frame does not change, the first device does not receive the extended broadcast frame. Further, the first device initiates the scanning request based on the content of the currently received extended broadcast frame or the content of the previously buffered extended broadcast frame (when the extended broadcast frame is not received this time, or the content of the extended broadcast frame is the same as the content of the previously received and buffered extended broadcast frame). Further, the first device receives the scanning response frame.

Optionally, the indication information may include the second indication information and the third indication information. If the first device determines, based on the second indication information, that the broadcast type is not the target type, regardless of whether the content of the scanning response frame indicated by the third indication information changes, the first device does not receive the extended broadcast frame. Further, the first device does not initiate the scanning request. Further, the first device does not receive the scanning response frame. If the first device determines, based on the second indication information, that the broadcast type is the target type, the first device determines, based on the third indication information, whether to receive the extended broadcast frame. If the third indication information indicates that the content of the scanning response frame changes, the first device receives the extended broadcast frame. Further, the first device initiates the scanning request based on the content of the extended broadcast frame. Further, the first device receives the scanning response frame. If the third indication information indicates that the content of the scanning response frame does not change, the first device does not receive the extended broadcast frame. Further, the first device does not initiate the scanning request. Further, the first device does not receive the scanning response frame.

Optionally, the third indication information may be included in the extended broadcast frame, and the first indication information may be included in the basic broadcast frame. If the first device determines, based on the first indication information, that the content of the extended broadcast frame changes, the first device receives the extended broadcast frame, and the first device receives the third indication information in the extended broadcast frame. If the third indication information indicates that the content of the scanning response frame changes, the first device initiates the scanning request. Further, the first device receives the scanning response frame. If the third indication information indicates that the content of the scanning response frame does not change, the first device initiates the scanning request, and the first device does not receive the scanning response frame, or the first device does not initiate the scanning request. If the first device determines, based on the first indication information, that the content of the extended broadcast frame does not change, the first device does not receive the extended broadcast frame. Further, the first device initiates the scanning request based on the content of the buffered extended broadcast frame. Further, the first device receives the scanning response frame.

Optionally, the third indication information may be included in the extended broadcast frame, and the second indication information may be included in the basic broadcast frame. If the broadcast type indicated by the second indication information is a target type of the first device, the first device receives the extended broadcast frame, and receives the third indication information in the extended broadcast frame. If the third indication information indicates that the content of the scanning response frame changes, the first device initiates the scanning request. Further, the first device receives the scanning response frame. If the third indication information indicates that the content of the scanning response frame does not change, the first device initiates the scanning request, and the first device does not receive the scanning response frame, or the first device does not initiate the scanning request. If the broadcast type indicated by the second indication information is not the target type of the first device, the first device does not receive the extended broadcast frame. Further, the first device does not initiate the scanning request. Further, the first device does not receive the scanning response frame.

With reference to the first aspect, in some implementations of the first aspect, the indication information may include the first indication information, the second indication information, and the third indication information.

Optionally, the three types of indication information are included in the basic broadcast frame. If the first device determines, based on the second indication information, that the broadcast type is not the target type, the first device does not receive the extended broadcast frame regardless of content indicated by the first indication information and the second indication information. Further, the first device does not initiate the scanning request. Further, the first device does not receive the scanning response. If the first device determines, based on the second indication information, that the broadcast type is the target type, the first device determines, based on the third indication information, whether to receive the extended broadcast frame. If the scanning response frame does not change, the first device does not receive the extended broadcast frame. Further, the first device does not initiate the scanning request. Further, the first device does not receive the scanning response. If the content of the scanning response frame changes, the first device determines, based on the first indication information, whether to receive the extended broadcast frame. If the content of the extended broadcast frame changes, the first device receives the extended broadcast frame. If the first indication information indicates that the content of the extended broadcast frame does not change, the first device does not receive the extended broadcast frame. Further, the first device initiates the scanning request based on the content of the currently received extended broadcast frame or the content of the previously buffered extended broadcast frame (when the extended broadcast frame is not received this time, or the content of the extended broadcast frame is the same as the content of the previously received and buffered extended broadcast frame). Further, the first device receives the scanning response frame.

Optionally, the first indication information and the second indication information may be included in the basic broadcast frame, and the third indication information may be included in the extended broadcast frame. The first device receives the basic broadcast frame, and determines, based on the second indication information, that the broadcast type is not the target type, and the first device does not receive the extended broadcast frame regardless of content indicated by the first indication information and the third indication information. Further, the scanning request is not initiated. Further, the scanning response is not received. If the first device determines, based on the second indication information, that the broadcast type is the target type, the first device determines, based on the first indication information, whether to receive the extended broadcast frame. If the first indication information indicates that the content of the extended broadcast frame does not change, the first device does not receive the extended broadcast frame. Correspondingly, the first device cannot receive the third indication information. The first device initiates the scanning request based on the content of the previously buffered extended broadcast frame (when the extended broadcast frame is not received this time, or the content of the extended broadcast frame is the same as the content of the previously received and buffered extended broadcast frame). Further, the first device receives the scanning response frame. If the first indication information indicates that the content of the extended broadcast frame changes, the first device receives the extended broadcast frame. Further, the first device receives the third indication information in the extended broadcast frame. If the third indication information indicates that the content of the scanning response frame changes, the first device initiates the scanning request. Further, the first device receives the scanning response. If the third indication information indicates that the content of the scanning response frame does not change, the first device does not initiate the scanning request, or the first device initiates the scanning request but does not receive the scanning response frame.

According to a second aspect, a broadcast information processing communication method is provided, including: A second device sends a basic broadcast frame to a first device, where the basic broadcast frame includes indication information, the indication information needs to be parsed and obtained by the first device, and the indication information includes at least one of the following: first indication information, where the first indication information indicates whether content of an extended broadcast frame is changed; second indication information, where the second indication information indicates a broadcast type; third indication information, where the third indication information indicates whether content of a scanning response frame changes.

According to the broadcast information processing communication method provided in this application, the indication information is added to the basic broadcast frame sent by the second device to the first device, so that the first device determines, based on the indication information, whether to receive the extended broadcast frame or the scanning response frame. A flexible receiving method is provided, so that the first device determines, based on an actual situation, whether to receive subsequent broadcast content. Further, when the extended broadcast frame or the scanning response frame is not received, power consumption of the first device in a broadcast information processing process is reduced. In addition, the first device parses, at a physical layer, the indication information in a frame header of the basic broadcast frame, so that power consumption of the first device in a parsing process is reduced.

With reference to the second aspect, in some implementations of the second aspect, the indication information is included in a physical layer frame header of the basic broadcast frame or a physical layer payload header of the basic broadcast frame. The physical layer frame header of the basic broadcast frame may further include physical layer control information such as encoding and decoding of the basic broadcast frame and new transmission and old transmission indications. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. The first device parses the physical layer frame header of the basic broadcast frame or the physical layer payload header of the basic broadcast frame, and obtains the indication information from the physical layer frame header of the basic broadcast frame or the physical layer payload header of the basic broadcast frame. The indication information is parsed in the physical layer frame header, so that power consumption of the first device in the parsing process is reduced.

According to a third aspect, a communication device is provided, including a processor and a memory, where the memory is configured to store a computer program, and the processor is configured to invoke and run the computer program from the memory, so that the communication device is enabled to perform the communication method in the first aspect or the second aspect, and the implementations of the first aspect or the second aspect.

Optionally, there may be one or more processors, and there may be one or more memories.

Optionally, the memory may be integrated with the processor, or the memory and the processor are separately disposed.

Optionally, the communication device further includes a transmitter (transmitting device) and a receiver (receiving device).

According to a fourth aspect, a computer program product is provided. The computer program product includes a computer program (which may also be referred to as code or an instruction).

When the computer program is run, a computer is enabled to perform the communication method in the first aspect or the second aspect, and the implementations of the first aspect or the second aspect.

According to a fifth aspect, a computer-readable medium is provided. The computer readable medium stores a computer program (which may also be referred to as code or an instruction).

When the computer program is run on a computer, the computer is enabled to perform the communication method in the first aspect or the second aspect, and the implementations of the first aspect or the second aspect.

### BRIEF DESCRIPTION OF DRAWINGS

FIG. 1 is a diagram of a system architecture according to an embodiment of this application;
FIG. 2 is a schematic diagram of a wireless short-range transmission protocol layer according to an embodiment of this application;
FIG. 3 is a schematic diagram of a structure of a basic broadcast frame according to an embodiment of this application;
FIG. 4 is a schematic diagram of a broadcast message receiving and subsequent communication processing procedure according to an embodiment of this application;
FIG. 5 is an example of a broadcast information processing method according to an embodiment of this application;
FIG. 6 is a schematic diagram of a frame header that is of a basic broadcast frame and that includes indication information according to an embodiment of this application;
FIG. 7 is a schematic diagram of a payload header including indication information according to an embodiment of this application;
FIG. 8 is another example of a broadcast information processing method according to an embodiment of this application;
FIG. 9 is still another example of a broadcast information processing method according to an embodiment of this application;
FIG. 10 is yet another example of a broadcast information processing method according to an embodiment of this application;
FIG. 11 is an example of a broadcast information processing communication apparatus according to an embodiment of this application; and
FIG. 12 is another example of a broadcast information processing communication apparatus according to an embodiment of this application.

### DESCRIPTION OF EMBODIMENTS

The following describes the technical solutions of this application with reference to the accompanying drawings.

A communication method provided in embodiments of this application may be applied to a scenario in which signal transmission exists. In this scenario, a signal is transmitted between two communication ends. An end that sends the signal is a signal sending end, and an end that receives the signal is a signal receiving end. The signal sending end and the signal receiving end may dynamically change. For example, at a first moment, a communication end A sends a signal and serves as a signal sending end. At a second moment, the communication end A receives a signal and serves as a signal receiving end. In addition, a communication end may be both a signal sending end and a signal receiving end, and communicate with different communication ends.

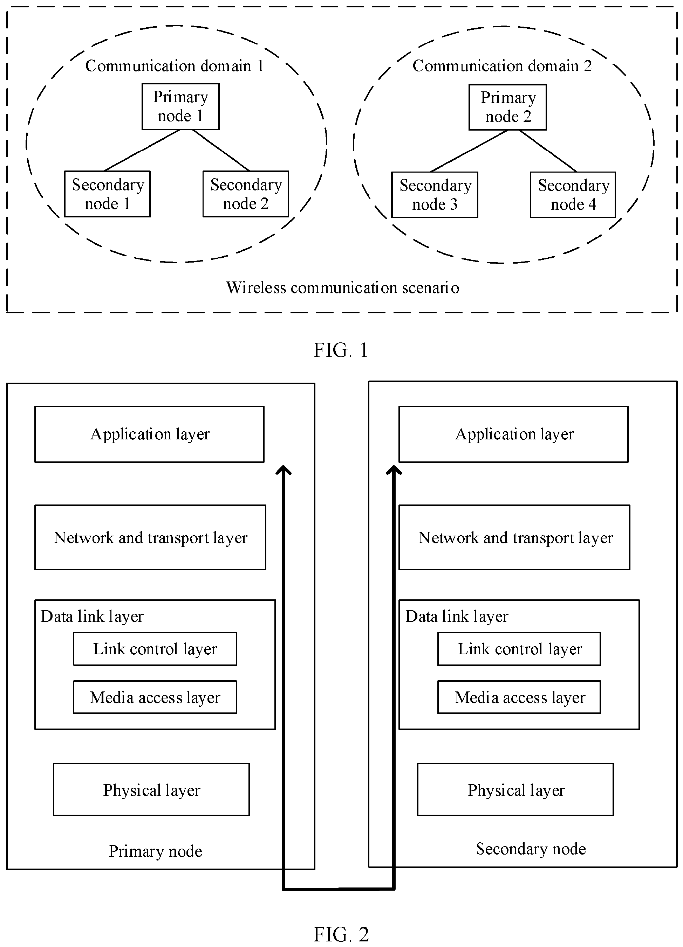

FIG. 1 shows a system architecture according to an embodiment of this application. The method provided in this application may be applied to a wireless communication scenario, for example, a short-range wireless communication scenario, a wide-area wireless communication scenario, or a local wireless communication scenario. In the wireless communication scenario, there may be a plurality of communication domains in a specific communication area or range. The communication domain may be a system including: a group of communication nodes that have a communication relationship, and a communication connection relationship (that is, a communication link) between the communication nodes. A communication domain may include a primary communication node (which may be referred to as a primary node for short) and at least one secondary communication node (which may be referred to as a secondary node for short). The primary node manages a time-frequency resource in the communication domain, and has a function of scheduling a resource for the communication link between the communication nodes in the communication domain. For example, FIG. 1 is a schematic diagram of a wireless communication scenario according to an embodiment of this application. In the wireless communication scenario, there may be at least one primary node and at least one secondary node corresponding to each primary node. For example, as shown in FIG. 1, the wireless communication scenario includes a primary node 1 and a primary node 2. The primary node 1, a secondary node 1, and a secondary node 2 form a communication domain 1, and the primary node 1 communicates with the secondary node 1 and the secondary node 2. The primary node 2, a secondary node 3, and a secondary node 4 form a communication domain 2, and the primary node 2 communicates with the secondary node 3 and the secondary node 4.

In an example, when the wireless communication scenario shown in FIG. 1 is a wide-area wireless communication scenario, the primary node 1 and the primary node 2 may be network devices, and the secondary node 1 to the secondary node 4 may be terminal devices. The network device may be a device with a wireless transceiver function or a chip that may be disposed in the network device. For example, the network device may be a radio access network (RAN) device in a wireless network of a specific communication standard, or may be referred to as a base station. The network device includes but is not limited to: a next generation NodeB (generation NodeB, gNB), a radio network controller (radio network controller, RNC), a NodeB (NodeB, NB), a base station controller (base station controller, BSC), a base transceiver station (base transceiver station, BTS), a home base station (such as a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, and a transmission point (transmission and reception point, TRP or transmission point, TP).

In some deployments, the RAN device may include a central unit (centralized unit, CU) and a distributed unit (distributed unit, DU). In addition, the RAN device may further include a radio frequency unit (radio frequency unit, RU). The CU implements some functions of the RAN device, and the DU implements some functions of the RAN device. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in the architecture, higher layer signaling such as RRC layer signaling or PDCP layer signaling may also be considered as being sent by the DU or sent by the DU and the RU. It may be understood that the network device may be a CU node, a DU node, or a device including a CU node and a DU node. In addition, the CU may be classified as a network device in a RAN, or the CU may be classified as a network device in a core network (CN). This is not limited herein.

The terminal device may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless receiving and sending function, a virtual reality (virtual reality, VR) terminal device, an augmented reality (augmented reality, AR) terminal device, a wireless terminal in industrial control (industrial control), a wireless terminal of self-driving (self-driving), a wireless terminal in telemedicine (remote medical), a wireless terminal in a smart grid (smart grid), a wireless terminal in transportation safety (transportation safety), a wireless terminal in a smart city (smart city), a smart wearable device (such as smart glasses, a smart watch, and a smart headset), a wireless terminal in a smart home (smart home), and the like, or may be a chip, a chip module (or a chip system), or the like that can be disposed in the foregoing device. An application scenario is not limited in embodiments of this application. A terminal device having a wireless transceiver function and a chip that may be disposed in the terminal device are collectively referred to as a terminal device in embodiments of this application.

In another example, when the wireless communication scenario shown in FIG. 1 is a local wireless communication scenario, the primary node 1 and the primary node 2 may be access points (access point, AP), and the secondary node 1 to the secondary node 4 may be stations (stations).

In another example, when the wireless communication scenario shown in FIG. 1 is a short-range wireless communication scenario, examples of the primary nodes and the secondary nodes in different short-range wireless communication scenarios are different. For example, when the short-range wireless communication scenario is an in-vehicle wireless communication scenario, the primary node 1 and the primary node 2 may be cockpit domain controllers (cockpit domain controller, CDC), and the secondary node 1 to the secondary node 4 may be an in-vehicle music speaker, an in-vehicle atmosphere lamp, or the like. For another example, when the short-range wireless communication scenario is a smart wearable wireless communication scenario, the primary node 1 and the primary node 2 may be mobile phones, and the secondary node 1 to the secondary node 4 may be a headset, a watch, or the like. For another example, when the short-range wireless communication scenario is a home wireless communication scenario, the primary node 1 and the primary node 2 may be home wireless gateways, and the secondary node 1 to the secondary node 4 may be household appliances or the like. For another example, when the short-range wireless communication scenario is an industrial short-range wireless communication scenario, the primary node 1 and the primary node 2 may be industrial wireless gateways, and the secondary node 1 to the secondary node 4 may be an automatic guided vehicle (automatic guided vehicle, AGV), a machine tool, a robot hand, or the like.

Certainly, the foregoing examples of the primary node and the secondary node are merely examples, and this is not limited in this application. It should be noted that, when the wireless communication scenario shown in FIG. 1 is another wireless communication scenario, the primary node and the secondary node may alternatively be other possibilities, which are not listed one by one in this application. In addition, roles of the primary node and the secondary node may change dynamically. For example, the primary node and the secondary node are exchanged, or the primary node becomes a secondary node of another device, and the secondary node becomes a primary node of another device.

The node in embodiments of this application may also be referred to as a communication node, a device (apparatus), a communication device (apparatus), or the like.

An example of a wireless short-range transmission protocol layer in embodiments of this application is shown in FIG. 2. Solutions in embodiments of this application mainly relate to a data link layer and a physical layer. The physical layer uses physical transmission media to provide physical channels for the data link layer, and transmits and receives data on these physical channels to implement bit stream transmission. For example, the physical transmission medium is a frequency band resource in a specific frequency range, and the physical channel may be defined based on a frequency and a bandwidth. For example, a frequency band used in wireless short-range communication has a frequency range of 2.400 to 2.4835 gigahertz (GHz). To support a plurality of devices simultaneously, the entire frequency band is divided into 40 parts, and each part has a bandwidth of 2 megahertz (MHz). Correspondingly, the physical channels may be 40 physical channels whose bandwidths are separately 2 MHz and whose frequencies are respectively f=2402+k*2 MHz, where k=0, ..., and 39.

The data link layer shields physical layer information from an upper-layer, such as a network and transport layer. The data link layer is configured to implement connection and communication between a primary node and a secondary node, and may provide functions such as resource management, access control, data segmentation, cascading, and a working mode to ensure reliable data transmission. In some implementations, the data link layer may be further divided into a media access layer and a link control layer.

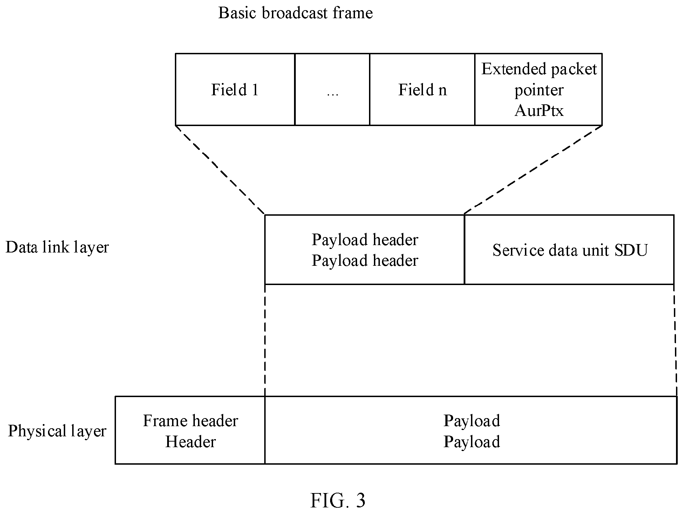

Broadcast can be used for discovery, connection, and public data transmission between devices. When a device wants to be discovered or connected, the device may send a connectable broadcast message. The broadcast message may include a basic broadcast frame and an extended broadcast frame (or an extended data frame). FIG. 3 is a schematic diagram of an example of a structure of a basic broadcast frame. As shown in FIG. 3, a higher layer, for example, a data link layer or a media access layer, of a sender device may add a payload header (Payload header) to a service data unit (service data unit, SDU) obtained from an upper layer of the higher layer, to obtain a protocol data unit (protocol data unit, PDU). The payload header may include a data frame type, and may also include higher layer control information, for example, one or more pieces of link-layer-related control information such as segmentation, reassembly, multiplexing, and a logical channel priority of the higher layer, for example, the data link layer or the media access layer. A physical layer entity obtains the PDU from the higher layer for example, the data link layer or the media access layer, uses the PDU as a payload (Payload), adds a physical layer frame header (Header) before the payload to form a data frame, and sends the data frame on a physical channel. The physical layer frame header (Header) may further include physical layer control information such as encoding and decoding of the data frame and new transmission and old transmission indications.

A receiver device receives the data frame from the physical channel, where the data frame may include the physical layer frame header and the payload. The data frame type may be obtained based on the payload header. For example, the data frame type may include a basic broadcast frame, an extended broadcast frame, or the like. Information such as a length of the payload may be further obtained. The payload is a PDU of an upper layer (the media access layer or the data link layer) of the physical layer. After removing the physical layer frame header, the physical layer entity delivers the payload to a data link layer entity or a media access layer entity for processing. The payload may include the payload header and the SDU. The payload header may include one or more fields. The data link layer entity or the media access layer entity may obtain related information of the SDU based on the payload header, and deliver the SDU to the upper layer of the media access layer or the data link layer for processing. The payload header of the basic broadcast frame may include an extended frame pointer AuxPtr field, to indicate to obtain a resource of an extended frame. For example, the obtaining a resource of an extended frame may include obtaining frequency, clock, and physical layer (Physical Layer, PHY) information of the extended broadcast frame. The frequency may also include a channel number, a frequency number, or the like. The clock may include one or more of a time interval, a frame number, a slot number, and the like.

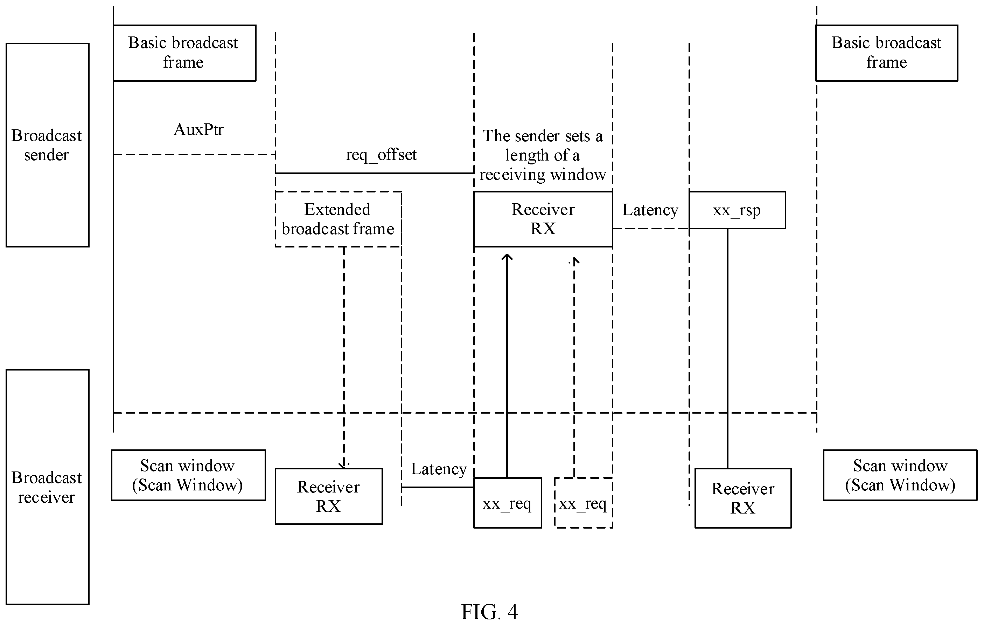

As shown in FIG. 4, a broadcast message receiving and subsequent communication processing procedure includes the following steps: A broadcast sender periodically sends a basic broadcast frame, and a receiver receives the basic broadcast frame, and obtains frequency, clock, and physical layer (Physical Layer, PHY) information of an extended broadcast frame from an extended frame pointer AuxPtr field in a payload header (Payload Header) of the basic broadcast frame. The receiver determines, based on the foregoing information, a start moment for receiving the extended broadcast frame, and receives the extended broadcast frame based on the start moment. The broadcast receiver parses the extended broadcast frame to obtain req_offset and latency information in the extended broadcast frame, determines a start location of a window of a scanning request SCAN_REQ or a connection request CONN_REQ, and initiates the scanning request or the connection request. Further, the broadcast receiver may receive a scanning response frame SCAN_RSP, or the broadcast receiver may establish a connection with the broadcast sender. Specifically, the broadcast receiver needs to determine a location of a scanning response window based on the latency information in the extended broadcast frame. In embodiments of this application, the first device may be an example of the broadcast receiver, and the second device may be an example of the broadcast sender.

Solutions in embodiments of this application may be used in short-range communication between two nodes, and supports broadcasting by a secondary node or a primary node with low power consumption. It is assumed that the secondary node is a broadcast sender, and the primary node is a broadcast receiver. The primary node determines, based on broadcast information sent by the secondary node, whether the secondary node is a device selected by the primary node. Further, the primary node may initiate a connection request or a scanning request. Further, the primary node may establish a connection to the secondary node, or the primary node receives a scanning response frame sent by the secondary node. After entering a connected state, when there is no resource, the secondary node may initiate a resource request to the primary node, and the primary node allocates a transmission resource. In embodiments of this application, the first device may be an example of the primary node, and the second device may be an example of the secondary node. Alternatively, resources may be allocated in a static or semi-static manner. A specific resource allocation manner is not limited in embodiments of this application.

The broadcast message is generated and sent by the broadcast sender, namely, the second device. A module for generating the broadcast message may be at a higher layer of the second device, or may be at a lower layer of the second device. The broadcast message is periodically sent through a broadcast channel or a data service channel. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The basic broadcast frame may be a basic broadcast physical channel PDU, and the extended broadcast frame may alternatively be an extended broadcast physical channel PDU.

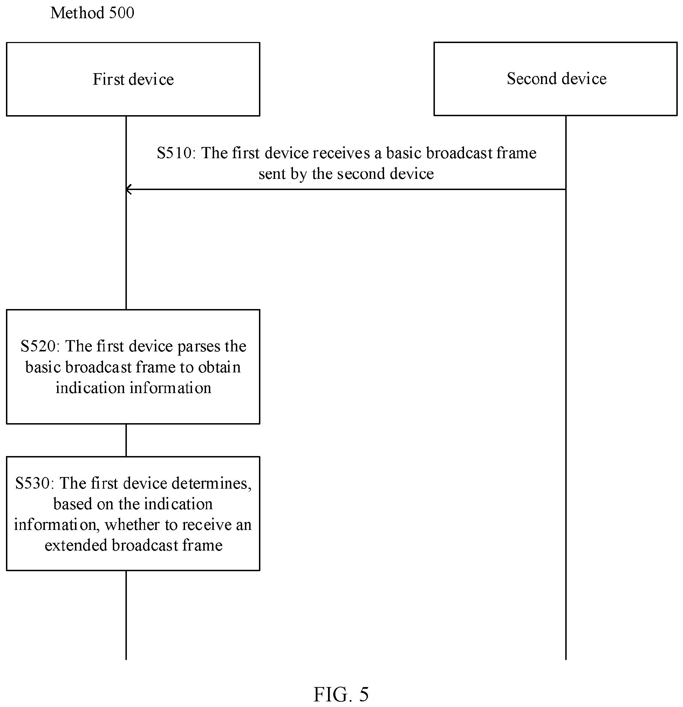

FIG. 5 is an example of a broadcast information processing communication method according to an embodiment of this application. As shown in FIG. 5, the method 500 includes the following steps.

S510: A first device receives a basic broadcast frame sent by a second device.

It should be understood that the first device may be an example of a broadcast receiver, and the second device may be an example of a broadcast sender.

When the second device wants to be discovered or connected, the second device may send a connectable broadcast message. The first device may discover the second device by receiving the broadcast message, and initiate a connection request or a scanning request. Further, the first device establishes a connection to the second device, or the first device receives a scanning response frame sent by the second device. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The first device may periodically receive the basic broadcast frame sent by the second device.

S520: The first device parses the basic broadcast frame to obtain indication information.

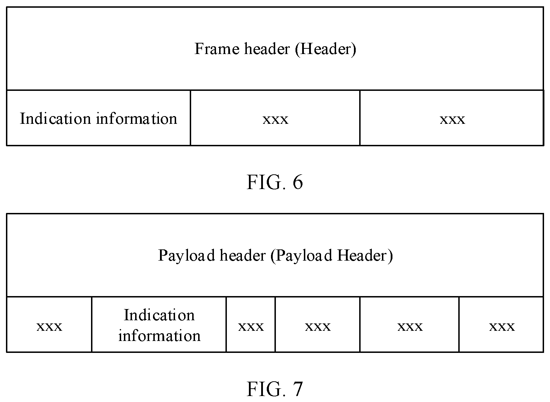

Specifically, the indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the indication information in the physical layer frame header is shown in FIG. 6. The indication information may be one or more bits added in the frame header of the basic broadcast frame. It should be understood that the indication information may alternatively be one or more bits that exist in the frame header of the basic broadcast frame. Optionally, the existing bits are one or more bits that are temporarily not used. The first device parses the frame header of the basic broadcast frame at a physical layer, so that a parsing difficulty can be reduced, and resources used for parsing can be reduced.

Specifically, the indication information may be located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the indication information in the physical layer payload header of the basic broadcast frame is shown in FIG. 7. The indication information may be one or more bits added in the physical layer payload header of the basic broadcast frame. It should be understood that the indication information may alternatively be a bit that exists in the physical layer payload header of the basic broadcast frame. Optionally, the existing bit is a bit that is temporarily not used.

A physical layer processing entity (or module) of the first device parses the physical layer frame header of the basic broadcast frame to obtain the indication information, or a higher layer processing entity (or module) of the first device parses the physical layer payload header of the basic broadcast frame to obtain the indication information.

Specifically, the indication information includes one or more of the following information.

First indication information indicates whether content of the extended broadcast frame changes. For example, the first indication information may include 1 bit, and 0 or 1 is used to indicate whether the content of the extended broadcast frame changes. An indication method is not limited in embodiments of this application.

Second indication information indicates a broadcast type. The broadcast type may include: scannable, connectable, unscannable, or disconnectable. As an example instead of a limitation, the broadcast type indicated by the second indication information may be indicated by using a bit in the second indication information. For example, 2 bits may be used to indicate the broadcast type, where 00 may indicate scannable and connectable, 01 may indicate scannable and disconnectable, 10 indicates unscannable and connectable, and 11 indicates unscannable and disconnectable. An indication method is not limited in embodiments of this application.

Third indication information indicates whether content of the scanning response frame changes. For example, the third indication information may include 1 bit, and 0 or 1 is used to indicate whether the content of the extended broadcast frame changes. An indication method is not limited in embodiments of this application.

S530: The first device determines, based on the indication information, whether to receive the extended broadcast frame.

In some implementations, the indication information may include any one of the first indication information, the second indication information, and the third indication information.

In a possible implementation, the indication information may include the first indication information. If the first indication information indicates that the content of the extended broadcast frame changes, the first device receives the extended broadcast frame. If the first indication information indicates that the content of the extended broadcast frame does not change, the first device may not receive the extended broadcast frame. It should be noted that, the first device receives, at a previous time of current broadcast, an extended broadcast frame whose content is the same as that of the current extended broadcast frame, and the first device may buffer the extended broadcast frame or the first device may obtain scanning-related or connection-related information from the extended broadcast frame. If the content of the current extended broadcast frame does not change, the first device may not receive the current extended broadcast frame, and continue to use the buffered extended broadcast frame or the scanning-related or connection-related information in the buffered extended broadcast frame. It may be understood that, that the first device does not receive the extended broadcast frame may be that the first device does not receive the extended broadcast frame, or that the first device receives the extended broadcast frame but does not parse the extended broadcast frame. Correspondingly, a quantity of times that the first device receives the extended broadcast frame may be reduced, or a quantity of times that the first device parses the extended broadcast frame may be reduced, so that power consumption is reduced. Optionally, the first indication information may indicate that the content of the current extended broadcast frame remains unchanged compared with the content of the previous extended broadcast frame. Further, the first device may initiate the scanning request or the connection request based on the currently received extended broadcast frame, the previously buffered extended broadcast frame, or the scanning-related or connection-related information in the buffered extended broadcast frame, and further receive the scanning response frame or establish the connection. It should be noted that the first device may determine a location of a window of the scanning request or the connection request based on the content of the extended broadcast frame. Specifically, the first device may determine the location of the window of the scanning request or the connection request based on req-offset information and latency information in the extended broadcast frame.

In a possible implementation, the indication information may include the second indication information. The second indication information indicates the broadcast type. If the broadcast type is a target type of the first device, the first device receives the extended broadcast frame. Further, the scanning request or the connection request is initiated based on the content of the extended broadcast frame. Further, the scanning response frame is received, or the connection is established. If the broadcast type is not the target type of the first device, the first device may not receive the extended broadcast frame, and correspondingly, does not initiate the scanning request or the connection request, does not receive the scanning response frame, or does not establish the connection.

In a possible implementation, the indication information may include the third indication information. The third indication information indicates whether the content of the scanning response frame changes. If the third indication information indicates that the content of the scanning response frame does not change, the first device does not need to receive the scanning response frame. Correspondingly, the extended broadcast frame does not need to be received. Further, the scanning request is not initiated. Further, the scanning response frame is not received. If the third indication information indicates that the content of the scanning response frame changes, the first device receives the extended broadcast frame. Further, the scanning request is initiated based on the content of the extended broadcast frame. Further, the scanning response frame is received.

In some embodiments, the third indication information may also be included in the physical layer frame header or the payload header of the extended broadcast frame. The first device receives the basic broadcast frame, parses the basic broadcast frame at the physical layer, and receives the extended broadcast frame based on content of the basic broadcast frame. Further, the first device parses the third indication information in the extended broadcast frame at the physical layer. If the third indication information included in the extended broadcast frame indicates that the content of the scanning response frame changes, the first device initiates the scanning request based on the content of the extended broadcast frame. Further, the first device receives the scanning response frame. If the third indication information indicates that the content of the scanning response frame does not change, the first device does not initiate the scanning request, or the first device initiates the scanning request based on the content of the extended broadcast frame, and does not receive the scanning response frame.

In some implementations, the indication information may include any two of the first indication information, the second indication information, and the third indication information. It should be understood that, in some embodiments, there may be a priority relationship between the first indication information, the second indication information, and the third indication information. In embodiments of this application, the priority relationship may be that the second indication information is higher than the third indication information, and the third indication information is higher than the first indication information. In this embodiment of this application, the foregoing priority relationship is used as an example for description. It should be understood that the indication information may have priorities in another order, and any combination of priorities is applicable to this embodiment of this application. This is not limited in this embodiment of this application. It should be understood that the indication information may alternatively have no priority limitation. The first device determines, based on a requirement, whether to receive a subsequent broadcast message frame, whether to initiate scanning, or the like. This is not limited in embodiments of this application.

In a possible implementation, the indication information may include the first indication information and the second indication information. If the first device determines, based on the second indication information, that the broadcast type is not the target type, regardless of whether the content of the extended broadcast frame indicated by the first indication information changes, the first device does not receive the extended broadcast frame. Further, the first device does not initiate the scanning request or the connection request. Further, the first device does not receive the scanning response frame or does not establish the connection. If the first device determines, based on the second indication information, that the broadcast type is the target type, the first device further determines, based on the first indication information, whether to receive the extended broadcast frame. If the first indication information indicates that the content of the extended broadcast frame changes, the first device receives the extended broadcast frame. If the first indication information indicates that the content of the extended broadcast frame does not change, the first device does not receive the extended broadcast frame. Further, the first device initiates the scanning request or the connection request based on content information of the currently received extended broadcast frame or the previously buffered extended broadcast frame. Further, the first device receives the scanning response frame sent by the second device, or the first device establishes the connection to the second device.

In a possible implementation, the indication information may include the first indication information and the third indication information. If the first device determines, based on the third indication information, that the content of the scanning response frame does not change, regardless of whether the content of the extended broadcast frame indicated by the first indication information changes, the first device does not receive the extended broadcast frame. Further, the first device does not initiate the scanning request. Further, the first device does not receive the scanning response frame. If the first device determines, based on the third indication information, that the content of the scanning response frame changes, the first device determines, based on the first indication information, whether to receive the extended broadcast frame. If the first indication information indicates that the content of the extended broadcast frame changes, the first device receives the extended broadcast frame. If the first indication information indicates that the content of the extended broadcast frame does not change, the first device does not receive the extended broadcast frame. Further, the first device initiates the scanning request based on the content of the currently received extended broadcast frame or the content of the previously buffered extended broadcast frame. Further, the first device receives the scanning response frame sent by the second device.

In a possible implementation, the indication information may include the second indication information and the third indication information. If the first device determines, based on the second indication information, that the broadcast type is not the target type, regardless of whether the content of the scanning response frame indicated by the third indication information changes, the first device does not receive the extended broadcast frame. Further, the first device does not initiate the scanning request. Further, the first device does not receive the scanning response frame. If the first device determines, based on the second indication information, that the broadcast type is the target type, the first device determines, based on the third indication information, whether to receive the extended broadcast frame. If the third indication information indicates that the content of the scanning response frame changes, the first device receives the extended broadcast frame. Further, the first device initiates the scanning request based on the content of the extended broadcast frame. Further, the scanning response frame is received. If the third indication information indicates that the content of the scanning response frame does not change, the first device does not receive the extended broadcast frame. Further, the first device does not initiate the scanning request. Further, the first device does not receive the scanning response frame.

In some embodiments, there may be two types of indication information. The third indication information is included in the extended broadcast frame, and the first indication information is included in the basic broadcast frame. In other words, the third indication information can be parsed only after the extended broadcast frame is received. If the extended broadcast frame is not received, it is equivalent that there is no third indication information. If the first device determines, based on the first indication information, that the content of the extended broadcast frame changes, the first device receives the extended broadcast frame, and the first device receives the third indication information in the extended broadcast frame. If the third indication information indicates that the content of the scanning response frame changes, the first device initiates the scanning request. Further, the first device receives the scanning response frame. If the third indication information indicates that the scanning response frame does not change, the first device initiates the scanning request, and the first device does not receive the scanning response frame, or the first device does not initiate the scanning request. If the first device determines, based on the first indication information, that the content of the extended broadcast frame does not change, the first device does not receive the extended broadcast frame. Further, the first device initiates the scanning request based on the content of the buffered extended broadcast frame. Further, the first device receives the scanning response frame.

In some embodiments, there are two types of indication information. The third indication information is included in the extended broadcast frame, and the second indication information is included in the basic broadcast frame. If the broadcast type indicated by the second indication information is a target type of the first device, the first device receives the extended broadcast frame, and receives the third indication information in the extended broadcast frame. If the third indication information indicates that the content of the scanning response frame changes, the first device initiates the scanning request. Further, the first device receives the scanning response frame. If the third indication information indicates that the scanning response frame does not change, the first device initiates the scanning request, and does not receive the scanning response frame, or the first device does not initiate the scanning request. If the broadcast type indicated by the second indication information is not the target type of the first device, the first device does not receive the extended broadcast frame. Further, the first device does not initiate the scanning request. Further, the first device does not receive the scanning response frame.

In some implementations, the indication information may include the first indication information, the second indication information, and the third indication information. There is a priority relationship between the first indication information, the second indication information, and the third indication information. In embodiments of this application, the priority relationship may be that the second indication information is higher than the third indication information, and the third indication information is higher than the first indication information. In this embodiment of this application, the foregoing priority relationship is used as an example for description. It should be understood that the indication information may have priorities in another order, and any combination of priorities is applicable to this embodiment of this application. This is not limited in this embodiment of this application. It should be understood that the indication information may alternatively have no priority limitation. The first device determines, based on a requirement, whether to receive a subsequent broadcast message frame, whether to initiate scanning, or the like. This is not limited in embodiments of this application.

Specifically, the indication information may be included in the basic broadcast frame. If the first device determines, based on the second indication information, that the broadcast type is not the target type, the first device does not receive the extended broadcast frame regardless of content indicated by the first indication information and the second indication information. Further, the scanning request is not initiated. Further, the scanning response is not received. If the first device determines, based on the second indication information, that the broadcast type is the target type. Further, the first device determines, based on the third indication information, whether to receive the extended broadcast frame. If the third indication information indicates that the scanning response frame does not change, the first device does not receive the extended broadcast frame. Further, the scanning request is not initiated. Further, the scanning response is not received. If the third indication information indicates that the content of the scanning response frame changes, further, the first device determines, based on the first indication information, whether to receive the extended broadcast frame. If the first indication information indicates that the content of the extended broadcast frame changes, the first device receives the extended broadcast frame. If the first indication information indicates that the content of the extended broadcast frame does not change, the first device does not receive the extended broadcast frame. Further, the first device initiates the scanning request based on the content of the currently received extended broadcast frame or the content of the previously buffered extended broadcast frame. Further, the scanning response frame is received.

In some embodiments, the first indication information and the second indication information may be included in the basic broadcast frame, and the third indication information may be included in the extended broadcast frame. The first device receives the basic broadcast frame, and determines, based on the second indication information, that the broadcast type is not the target type, and the first device does not receive the extended broadcast frame regardless of content indicated by the first indication information and the third indication information. Further, the scanning request is not initiated. Further, the scanning response is not received. If the first device determines, based on the second indication information, that the broadcast type is the target type, further, the first device determines, based on the first indication information, whether to receive the extended broadcast frame. If the first indication information indicates that the content of the extended broadcast frame does not change, the first device does not receive the extended broadcast frame. Correspondingly, the first device cannot receive the third indication information. The first device initiates the scanning request based on the content of the previously buffered extended broadcast frame. Further, the scanning response frame is received. If the first indication information indicates that the content of the extended broadcast frame changes, the first device receives the extended broadcast frame. Further, the first device receives the third indication information in the extended broadcast frame. If the third indication information indicates that the content of the scanning response frame changes, the first device initiates the scanning request. Further, the first device receives the scanning response frame. If the third indication information indicates that the content of the scanning response frame does not change, the first device does not initiate the scanning request, or the first device initiates the scanning request but does not receive the scanning response frame.

According to the broadcast information processing method provided in embodiments of this application, the indication information is added to the basic broadcast frame sent by the second device to the first device, so that the first device determines, based on the indication information, whether to receive the extended broadcast frame or the scanning response frame. A flexible receiving method is embodiment provided, so that the first device determines, based on an actual situation, whether to receive subsequent broadcast content. Further, when the extended broadcast frame or the scanning response frame is not received, power consumption of the first device in a broadcast information processing process is reduced.

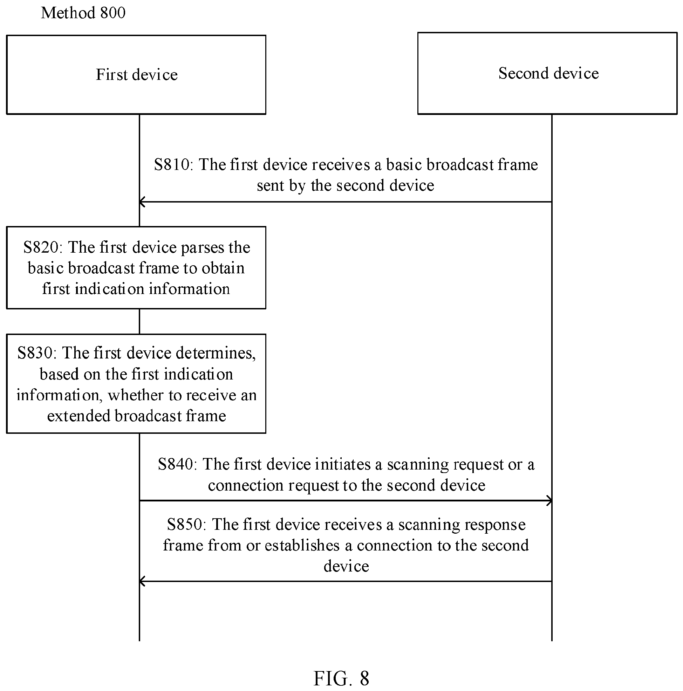

FIG. 8 is an example of a broadcast information processing communication method according to an embodiment of this application. As shown in FIG. 8, the method 800 includes the following steps.

S810: A first device receives a basic broadcast frame sent by a second device.

It should be understood that the first device is an example of a broadcast receiver, and the second device is an example of a broadcast sender.

When the second device wants to be discovered or connected, the second device may send a connectable broadcast message. The first device may discover the second device by receiving the broadcast message, and initiate a connection request or a scanning request. Further, the first device establishes a connection to the second device, or the first device receives a scanning response frame sent by the second device. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The first device may periodically receive the basic broadcast frame sent by the second device.

S820: The first device parses the basic broadcast frame to obtain first indication information.

Specifically, the first indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the first indication information in the physical layer frame header is shown in FIG. 6. The indication information may be one or more bits added in the frame header of the basic broadcast frame. It should be understood that the first indication information may alternatively be a bit that exists in the frame header of the basic broadcast frame. Optionally, the existing bit is a bit that is temporarily not used. The first device parses the frame header of the basic broadcast frame at a physical layer, so that a parsing difficulty can be reduced, and resources used for parsing can be reduced.

Specifically, the first indication information is located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the first indication information in the physical layer payload header of the basic broadcast frame is shown in FIG. 7. The first indication information may be one or more bits added in the physical layer payload header of the basic broadcast frame. It should be understood that the first indication information may alternatively be a bit that exists in the physical layer payload header of the basic broadcast frame. Optionally, the existing bit is a bit that is temporarily not used.

A physical layer processing entity (or module) of the first device parses the physical layer frame header of the basic broadcast frame to obtain the first indication information, or a higher layer processing entity (or module) of the first device parses the physical layer payload header of the basic broadcast frame to obtain the first indication information.

Specifically, the first indication information indicates whether content of the extended broadcast frame changes. For example, the first indication information may include 1 bit, and 0 or 1 is used to indicate whether the content of the extended broadcast frame changes. An indication method is not limited in embodiments of this application.

In some embodiments, the first indication information indicates that the content of the extended broadcast frame changes. Optionally, the first indication information may indicate that the content of the extended broadcast frame changes compared with a previous broadcast.

In some embodiments, the first indication information indicates that the content of the extended broadcast frame does not change. Optionally, the first indication information may indicate that the content of the extended broadcast frame does not change compared with a previous broadcast.

S830: The first device determines, based on the first indication information, whether to receive the extended broadcast frame.

Specifically, the first device receives the basic broadcast frame, and further obtains, through parsing, the first indication information in the physical layer frame header of the basic broadcast frame or the physical layer payload header of the basic broadcast frame.

In some embodiments, the first indication information indicates that the content of the extended broadcast frame changes. Specifically, a meaning of that the content of the extended broadcast frame changes is similar to that of step S820. The first device receives, based on the first indication information, the extended broadcast frame.

In some embodiments, the first indication information indicates that the content of the extended broadcast frame does not change. Specifically, a meaning of that the content of the extended broadcast frame does not change is similar to step S820. Correspondingly, the content of the extended broadcast frame does not change, and the first device buffers the content of the extended broadcast frame. In a possible implementation, the first device receives, in the previous broadcast, an extended broadcast frame whose content is consistent with the content of the extended broadcast frame. Therefore, the first device buffers the content of the extended broadcast frame. The first device does not receive, based on the first indication information, the extended broadcast frame, so that power consumption of the first device can be reduced.

S840: The first device initiates a scanning request or a connection request.

Specifically, the first device determines a start location of a window of the scanning request or the connection request based on the content of the extended broadcast frame that is currently received or previously buffered, and initiates the scanning request or the connection request to the second device at the location.

It should be noted that a broadcast type may be classified into scannable, connectable, unscannable, and disconnectable. In a possible implementation, there are at least the following possible broadcast types: connectable and scannable, connectable and unscannable, disconnectable and scannable, and disconnectable and unscannable.

S850: The first device receives a scanning response from or establishes a connection to the second device.

It should be noted that in step S840, if the first device initiates the connection request, the second device establishes the connection to the first device. If the first device initiates the scanning request, the second device sends the scanning response frame to the first device. The scanning response frame includes more information.

In some embodiments, the first device may receive other indication information, and the first device determines a receiving status of a subsequent broadcast message frame based on the first indication information and the other indication information. The broadcast message frame may include an extended broadcast frame, a scanning response frame, and the like. For detailed descriptions, refer to the method 500.

According to the method provided in this embodiment of this application, the second device adds the first indication information to the frame header or the payload of the basic broadcast frame, so that the first device can learn whether the content of the extended broadcast frame changes from content previously received by the first device, to determine whether the extended broadcast frame needs to be received. A flexible broadcast information processing method is provided. When the content does not change, the first device does not need to receive the extended broadcast frame, so that power consumption of the first device is reduced.

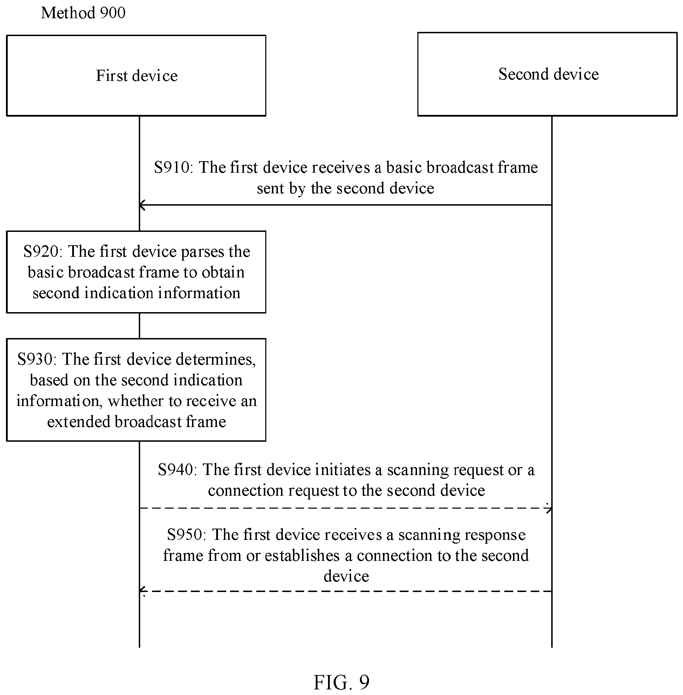

FIG. 9 is another example of a broadcast information processing method according to an embodiment of this application. As shown in FIG. 9, the method 900 includes the following steps.

S910: A first device receives a basic broadcast frame sent by a second device.

It should be understood that the first device is an example of a broadcast receiver, and the second device is an example of a broadcast sender.

When the second device wants to be discovered or connected, the second device may send a connectable broadcast message. The first device may discover the second device by receiving the broadcast message, and initiate a connection request or a scanning request. Further, the first device establishes a connection to the second device, or the first device receives a scanning response frame sent by the second device. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The first device may periodically receive the basic broadcast frame sent by the second device.

S920: The first device parses the basic broadcast frame to obtain second indication information.

Specifically, the second indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the second indication information in the physical layer frame header is shown in FIG. 6. The second indication information may be a bit added in the frame header of the basic broadcast frame. It should be understood that the second indication information may alternatively be a bit that exists in the frame header of the basic broadcast frame. Optionally, the existing bit is a bit that is temporarily not used. The first device parses the frame header of the basic broadcast frame at a physical layer, so that a parsing difficulty can be reduced, and resources used for parsing can be reduced.

Specifically, the second indication information is located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the second indication information in the physical layer payload header of the basic broadcast frame is shown in FIG. 7. The second indication information may be one or more bits added in the physical layer payload header of the basic broadcast frame. It should be understood that the second indication information may alternatively be a bit that exists in the physical layer payload header of the basic broadcast frame. Optionally, the existing bit is a bit that is temporarily not used.

A physical layer processing entity (or module) of the first device parses the physical layer frame header of the basic broadcast frame to obtain the second indication information, or a higher layer processing entity (or module) of the first device parses the physical layer payload header of the basic broadcast frame to obtain the second indication information.

The second indication information indicates a broadcast type. The broadcast type may include: scannable, connectable, unscannable, or disconnectable. Optionally, the type may be indicated by using 2 bits. In an example, 00 may indicate scannable and connectable, 01 may indicate scannable and disconnectable, 10 indicates unscannable and connectable, and 11 indicates unscannable and disconnectable. An indication method is not limited in embodiments of this application.

S930: The first device determines, based on the second indication information, whether to receive the extended broadcast frame.

Specifically, the first device receives the basic broadcast frame, and further parses the second indication information in the physical layer frame header of the basic broadcast frame or the physical layer payload header of the basic broadcast frame.

The first device determines, based on the second indication information, whether the broadcast type is a target type. If the broadcast type is the target type of the first device, the first device receives the extended broadcast frame. If the broadcast type is not the target type of the first device, optionally, the first device does not receive the extended broadcast frame. Optionally, the first device may receive the extended broadcast frame, but step S940 and step S950 are not performed.

S940: The first device initiates a scanning request or a connection request.

It should be noted that this step is optional. The first device determines that the broadcast type is the target type, receives the extended broadcast frame, and initiates the scanning request or the connection request to the second device.

S950: The first device receives a scanning response from or establishes a connection to the second device.

It should be noted that this step is optional, and this step exists only when S940 exists. In step S940, if the first device initiates the connection request, the second device establishes the connection to the first device. If the first device initiates the scanning request, the second device sends the scanning response frame to the first device. The scanning response frame includes more information.

In some embodiments, the first device may receive other indication information, and the first device determines a receiving status of a subsequent broadcast message frame based on the second indication information and the other indication information. For detailed descriptions, refer to the method 500.

According to the method provided in this embodiment of this application, the second indication information is added to the frame header or the payload of the basic broadcast frame, so that the first device can learn the broadcast type in advance, to determine whether the broadcast type is the target type, and determine whether the extended broadcast frame needs to be received and a subsequent communication procedure needs to be performed. A flexible broadcast information processing method is provided. If the extended broadcast frame is not received, power consumption of the first device can be reduced.

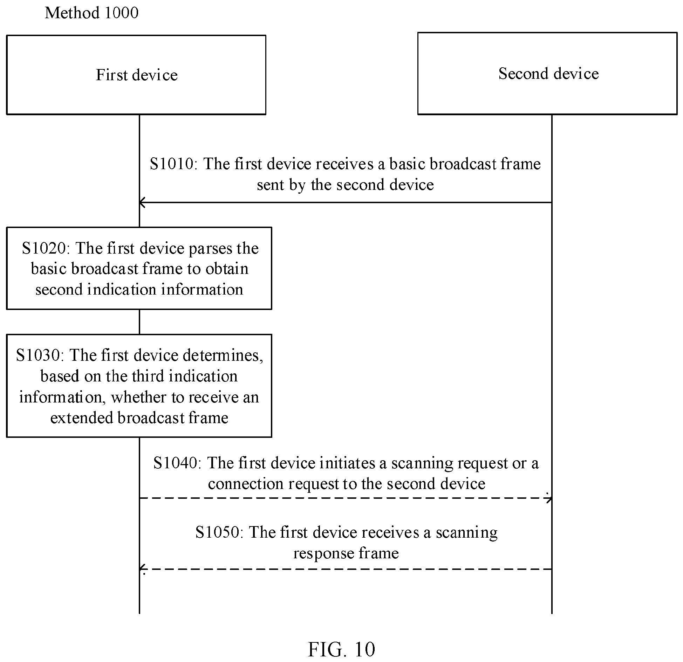

FIG. 10 is an example of a broadcast information processing method according to an embodiment of this application. As shown in FIG. 10, the method 1000 includes the following steps.

S 1010: A first device receives a basic broadcast frame sent by a second device.

It should be understood that the first device is an example of a broadcast receiver, and the second device is an example of a broadcast sender.

When the second device wants to be discovered or connected, the second device may send a connectable broadcast message. The first device may discover the second device by receiving the broadcast message, and initiate a connection request or a scanning request. Further, the first device establishes a connection to the second device, or the first device receives a scanning response frame sent by the second device. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The first device may periodically receive the basic broadcast frame sent by the second device.

S1020: The first device parses the basic broadcast frame to obtain third indication information.

Specifically, the third indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the third indication information in the physical layer frame header is shown in FIG. 6. The third indication information may be a bit added in the frame header of the basic broadcast frame. It should be understood that the third indication information may alternatively be a bit that exists in the frame header of the basic broadcast frame. Optionally, the existing bit is a bit that is temporarily not used. The first device parses the frame header of the basic broadcast frame at a physical layer, so that a parsing difficulty can be reduced, and resources used for parsing can be reduced.

Specifically, the third indication information is located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the third indication information in the payload header of the basic broadcast frame is shown in FIG. 7. The third indication information may be a bit added in the payload header of the basic broadcast frame. It should be understood that the third indication information may alternatively be a bit that exists in the payload header of the basic broadcast frame. Optionally, the existing bit is a bit that is temporarily not used.

A physical layer processing entity (or module) of the first device parses the physical layer frame header of the basic broadcast frame to obtain the third indication information, or a higher layer processing entity (or module) of the first device parses the physical layer payload header of the basic broadcast frame to obtain the third indication information.

Specifically, the third indication information indicates whether content of the extended broadcast frame changes. For example, the third indication information may include 1 bit, and 0 or 1 is used to indicate whether the content of the extended broadcast frame changes. An indication method is not limited in embodiments of this application.

S1030: The first device determines, based on the third indication information, whether to receive the extended broadcast frame.

It should be noted that, if the first device determines, based on the third indication information, that content of the scanning response frame does not change, the first device does not need to receive the extended broadcast frame, and does not need to initiate a subsequent procedure. If the first device determines, based on the third indication information, that the content of the scanning response frame changes, the first device receives the extended broadcast frame.

S 1040: The first device initiates a scanning request.

It should be noted that this step is optional. If the first device determines, based on the third indication information, that the content of the scanning response frame does not change, the first device does not perform a subsequent procedure. The first device does not receive the extended broadcast frame, and does not initiate the scanning request. If the first device determines, based on the third indication information, that the content of the scanning response frame changes, the first device determines that the scanning response frame needs to be received. Correspondingly, the first device needs to receive the extended broadcast frame, and initiates the scanning request based on the content of the extended broadcast frame and content of the basic broadcast frame.

S1050: The first device receives the scanning response frame.

It should be noted that this step is based on step S1040. After initiating the scanning request, the first device receives the scanning response frame.

In some embodiments, the third indication information is included in the frame header or the payload header of the extended broadcast frame. In this embodiment, the first device receives the basic broadcast frame, receives the extended broadcast frame based on the content of the basic broadcast frame, and parses the extended broadcast frame to obtain the third indication information. If the third indication information indicates that the content of the scanning response frame changes, the first device initiates the scanning request, and receives the scanning response frame from the second device. If the third indication information indicates that the content of the scanning response frame does not change, the first device does not initiate the scanning request, or the first device initiates the scanning request but does not receive the scanning response frame.

In some embodiments, the first device may receive other indication information, and the first device determines a receiving status of a subsequent broadcast message frame based on the third indication information and the other indication information. For detailed descriptions, refer to the method 500.

According to the method provided in this embodiment of this application, the third indication information is added to the frame header or the payload of the basic broadcast frame or the extended broadcast frame, so that the first device can determine whether the content of the scanning response frame changes, and determine, based on the third indication information, whether to receive a subsequent broadcast message. A flexible broadcast information processing method is provided. If the extended broadcast frame or the scanning response frame is not received, power consumption of the first device can be reduced.

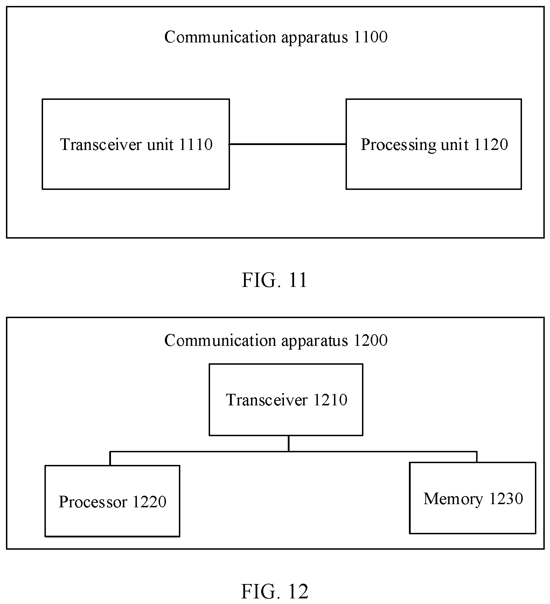

FIG. 11 is an example of a communication apparatus according to an embodiment of this application. Units in the communication apparatus 1100 may be implemented by using software.

In some embodiments, the communication apparatus 1100 may be the first device in the foregoing method embodiment 500, or may be a chip configured to implement a function of the first device in the foregoing method embodiment. It should be understood that the communication apparatus 1100 may correspond to steps corresponding to the first device in the method 500 in embodiments of this application. The communication apparatus 1100 includes:
a transceiver unit 1110, configured to receive a basic broadcast frame sent by a second device; and
a processing unit 1120, configured to parse the basic broadcast frame to obtain indication information.

It should be understood that the communication apparatus may be an example of a broadcast receiver, and the second device may be an example of a broadcast sender.

When the second device wants to be discovered or connected, the second device may send a connectable broadcast message. The transceiver unit 1110 may discover the second device by receiving the broadcast message, and initiate a connection request or a scanning request. Further, the processing unit 1120 establishes a connection to the second device, or the transceiver unit 1110 receives a scanning response frame sent by the second device. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The transceiver unit 1110 may periodically receive the basic broadcast frame sent by the second device.

Specifically, the indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the indication information in the physical layer frame header is shown in FIG. 6. It should be understood that the indication information may alternatively be a bit that exists in the frame header of the basic broadcast frame. Optionally, the existing bit is a bit that is temporarily not used. The processing unit 1120 parses the frame header of the basic broadcast frame at a physical layer, so that a parsing difficulty can be reduced, and resources used for parsing can be reduced.

Specifically, the indication information is located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the indication information in the payload header of the basic broadcast frame is shown in FIG. 7. The indication information may be a bit added in the payload header of the basic broadcast frame. It should be understood that the indication information may alternatively be a bit that exists in the payload header of the basic broadcast frame. Optionally, the existing bit is a bit that is temporarily not used.

A physical layer processing entity (or module) of the processing unit 1120 parses the basic broadcast frame to obtain the indication information, or a higher layer processing entity (or module) of the processing unit 1120 parses the basic broadcast frame to obtain the indication information.

Specifically, the indication information includes at least one of the following information.

First indication information indicates whether content of the extended broadcast frame changes. For example, the first indication information may include 1 bit, and 0 or 1 is used to indicate whether the content of the extended broadcast frame changes. An indication method is not limited in embodiments of this application.

Second indication information indicates a broadcast type. The broadcast type may include: scannable, connectable, unscannable, or disconnectable. As an example instead of a limitation, the broadcast type indicated by the second indication information may be indicated by using a bit in the second indication information. For example, 2 bits may be used to indicate the broadcast type, where 00 may indicate scannable and connectable, 01 may indicate scannable and disconnectable, 10 indicates unscannable and connectable, and 11 indicates unscannable and disconnectable. An indication method is not limited in embodiments of this application.

Third indication information indicates whether content of the scanning response frame changes. For example, the third indication information may include 1 bit, and 0 or 1 is used to indicate whether the content of the extended broadcast frame changes. An indication method is not limited in embodiments of this application.

The processing unit 1120 is further configured to determine, based on the indication information, whether to receive the extended broadcast frame.

In some implementations, the indication information may include any one of the first indication information, the second indication information, and the third indication information.

In a possible implementation, the indication information may include the first indication information. If the first indication information indicates that the content of the extended broadcast frame changes, the transceiver unit 1110 receives the extended broadcast frame. If the first indication information indicates that the content of the extended broadcast frame does not change, the transceiver unit 1110 does not receive the extended broadcast frame. It should be noted that the transceiver unit 1110 receives, at a previous time of current broadcast, an extended broadcast frame whose content is the same as that of the current extended broadcast frame, and the processing unit 1120 buffers the content of the extended broadcast frame. Therefore, if the content of the current extended broadcast frame does not change, the transceiver unit 1110 may not receive the current extended broadcast frame, and perform a subsequent procedure based on the content of the buffered extended broadcast frame, so that power consumption is saved. Optionally, the first indication information may indicate that the content of the current extended broadcast frame remains unchanged compared with the content of the previous extended broadcast frame. Further, the processing unit 1120 initiates the scanning request or the connection request based on the content of the currently received extended broadcast frame or the previously buffered extended broadcast frame and content of the basic broadcast frame. Further, the scanning response frame is received or the connection is established. It should be noted that the processing unit 1120 determines a location of a window of the scanning request or the connection request based on the content of the extended broadcast frame and the content of the basic broadcast frame. Specifically, the processing unit 1120 determines the location of the window based on req-offset information and latency information of the extended broadcast frame and information in the basic broadcast frame.

In a possible implementation, the indication information may include the second indication information, and the second indication information indicates the broadcast type. If the processing unit 1120 determines that the broadcast type is a target type, the transceiver unit 1110 receives the extended broadcast frame. Further, the scanning request or the connection request is initiated based on the content of the extended broadcast frame. Further, the scanning response frame is received or the connection is established. If the processing unit 1120 determines that the broadcast type is not the target type, the transceiver unit 1110 may not receive the extended broadcast frame. Correspondingly, the scanning request or the connection request is not initiated, the scanning response frame is not received, or the connection is not established.

In a possible implementation, the indication information includes the third indication information. The third indication information indicates whether the content of the scanning response frame changes. If the third indication information indicates that the content of the scanning response frame does not change, the transceiver unit 1110 does not need to receive the scanning response frame. Correspondingly, the extended broadcast frame does not need to be received. Further, the scanning request is not initiated. Further, the scanning response frame is not received. If the third indication information indicates that the content of the scanning response frame changes, the transceiver unit 1110 receives the extended broadcast frame. Further, the scanning request is initiated based on the content of the extended broadcast frame. Further, the scanning response frame is received.

In some embodiments, the third indication information may be included in the physical layer frame header or the payload header of the extended broadcast frame. The transceiver unit 1110 receives the basic broadcast frame, receives the extended broadcast frame based on the content of the basic broadcast frame according to a communication procedure, and further parses the third indication information in the extended broadcast frame at the physical layer. If the third indication information included in the extended broadcast frame indicates that the content of the scanning response frame changes, the transceiver unit 1110 initiates the scanning request based on the content of the extended broadcast frame. Further, the transceiver unit 1110 receives the scanning response frame. If the third indication information indicates that the content of the scanning response frame does not change, the processing unit 1120 does not initiate the scanning request, or the processing unit 1120 initiates the scanning request based on the content of the basic broadcast frame and the content of the extended broadcast frame. The scanning response frame is not received.

In some implementations, the indication information may include any two of the first indication information, the second indication information, and the third indication information. There is a priority relationship between the first indication information, the second indication information, and the third indication information. In embodiments of this application, the priority relationship may be that the second indication information is higher than the third indication information, and the third indication information is higher than the first indication information. In this embodiment of this application, the foregoing priority relationship is used as an example for description. It should be understood that the indication information may have priorities in another order, and any combination of priorities is applicable to this embodiment of this application. This is not limited in this embodiment of this application.

In a possible implementation, the indication information may include the first indication information and the second indication information. If the processing unit 1120 determines, based on the second indication information, that the broadcast type is not the target type, regardless of whether the content of the extended broadcast frame indicated by the first indication information changes, the transceiver unit 1110 does not receive the extended broadcast frame. Further, the processing unit 1120 does not initiate the scanning request or the connection request. Further, the transceiver unit 1110 does not receive the scanning response frame or does not establish the connection. If the processing unit 1120 determines, based on the second indication information, that the broadcast type is the target type, the processing unit 1120 determines, based on the first indication information, whether to receive the extended broadcast frame. If the first indication information indicates that the content of the extended broadcast frame changes, the transceiver unit 1110 receives the extended broadcast frame. If the first indication information indicates that the content of the extended broadcast frame does not change, the transceiver unit 1110 does not receive the extended broadcast frame. Further, the processing unit 1120 initiates the scanning request or the connection request based on the content of the currently received extended broadcast frame or the previously buffered extended broadcast frame. Further, the scanning response frame is received or the connection is established.

In a possible implementation, the indication information may include the first indication information and the third indication information. If the processing unit 1120 determines, based on the third indication information, that the content of the scanning response frame does not change, regardless of whether the content of the extended broadcast frame indicated by the first indication information changes, the transceiver unit 1110 does not receive the extended broadcast frame. Further, the processing unit 1120 does not initiate the scanning request. Further, the transceiver unit 1110 does not receive the scanning response frame. If the processing unit 1120 determines, based on the third indication information, that the content of the scanning response frame changes, the processing unit 1120 determines, based on the first indication information, whether to receive the extended broadcast frame. If the first indication information indicates that the content of the extended broadcast frame changes, the transceiver unit 1110 receives the extended broadcast frame. If the first indication information indicates that the content of the extended broadcast frame does not change, the transceiver unit 1110 does not receive the extended broadcast frame. Further, the processing unit 1120 initiates the scanning request based on the content of the currently received extended broadcast frame or the previously buffered extended broadcast frame and the content of the basic broadcast frame. Further, the scanning response frame is received.

In a possible implementation, the indication information may include the second indication information and the third indication information. If the first device determines, based on the second indication information, that the broadcast type is not the target type, regardless of whether the content of the scanning response frame indicated by the third indication information changes, the transceiver unit 1110 does not receive the extended broadcast frame. Further, the processing unit 1120 does not initiate the scanning request. Further, the transceiver unit 1110 does not receive the scanning response frame. If the processing unit 1120 determines, based on the second indication information, that the broadcast type is the target type, the processing unit 1120 determines, based on the third indication information, whether to receive the extended broadcast frame. If the third indication information indicates that the content of the scanning response frame changes, the transceiver unit 1110 receives the extended broadcast frame. Further, the scanning request is initiated based on the content of the extended broadcast frame. Further, the scanning response frame is received. If the third indication information indicates that the content of the scanning response frame does not change, the transceiver unit 1110 does not receive the extended broadcast frame. Further, the scanning request is not initiated. Further, the scanning response frame is not received.

In some embodiments, there may be two types of indication information. The third indication information may be included in the extended broadcast frame, and the first indication information is included in the basic broadcast frame. In other words, the third indication information can be parsed only after the extended broadcast frame is received. If the extended broadcast frame is not received, it is equivalent that there is no third indication information. If the processing unit 1120 determines, based on the first indication information, that the content of the extended broadcast frame changes, the processing unit 1120 receives the extended broadcast frame, and receives the third indication information in the extended broadcast frame. If the third indication information indicates that the content of the scanning response frame changes, the processing unit 1120 initiates the scanning request. Further, the scanning response frame is received. If the third indication information indicates that the scanning response frame does not change, the processing unit 1120 initiates the scanning request, and the scanning response frame is not received, or the processing unit 1120 does not initiate the scanning request. If the processing unit 1120 determines, based on the first indication information, that the content of the extended broadcast frame does not change, the extended broadcast frame is not received. Further, the scanning request is initiated based on the content of the basic broadcast frame and the content of the buffered extended broadcast frame. Further, the scanning response frame is received.

In some embodiments, there may be two types of indication information. The third indication information may be included in the extended broadcast frame, and the second indication information is included in the basic broadcast frame. If the broadcast type indicated by the second indication information is the target type of the processing unit 1120, the transceiver unit 1110 receives the extended broadcast frame, and receives the third indication information in the extended broadcast frame. If the third indication information indicates that the content of the scanning response frame changes, the processing unit 1120 initiates the scanning request. Further, the scanning response frame is received. If the third indication information indicates that the scanning response frame does not change, the processing unit 1120 initiates the scanning request, and does not receive the scanning response frame, or the processing unit 1120 does not initiate the scanning request. If the broadcast type indicated by the second indication information is not the target type of the processing unit 1120, the transceiver unit 1110 does not receive the extended broadcast frame. Further, the scanning request is not initiated. Further, the scanning response frame is not received.

In some implementations, the indication information may include the first indication information, the second indication information, and the third indication information. There is a priority relationship between the first indication information, the second indication information, and the third indication information. In embodiments of this application, the priority relationship may be that the second indication information is higher than the third indication information, and the third indication information is higher than the first indication information. In this embodiment of this application, the foregoing priority is e used as an example for description. It should be understood that the indication information may have priorities in another order, and any combination of priorities is applicable to this embodiment of this application. This is not limited in this embodiment of this application.

Specifically, the three types of indication information may be included in the basic broadcast frame. If the processing unit 1120 determines, based on the second indication information, that the broadcast type is not the target type, the transceiver unit 1110 does not receive the extended broadcast frame regardless of content indicated by the first indication information and the second indication information. Further, the scanning request is not initiated. Further, the scanning response is not received. If the processing unit 1120 determines, based on the second indication information, that the broadcast type is the target type. Further, the processing unit 1120 determines, based on the third indication information, whether to receive the extended broadcast frame. If the third indication information indicates that the scanning response frame does not change, the transceiver unit 1110 does not receive the extended broadcast frame. Further, the scanning request is not initiated. Further, the scanning response is not received. If the third indication information indicates that the content of the scanning response frame changes, the processing unit 1120 further determines, based on the first indication information, whether to receive the extended broadcast frame. If the first indication information indicates that the content of the extended broadcast frame changes, the transceiver unit 1110 receives the extended broadcast frame. If the first indication information indicates that the content of the extended broadcast frame does not change, the transceiver unit 1110 does not receive the extended broadcast frame. Further, the processing unit 1120 initiates the scanning request based on the content of the currently received extended broadcast frame or the previously buffered extended broadcast frame and the content of the basic broadcast frame. Further, the scanning response frame is received.

In some embodiments, the first indication information and the second indication information may be included in the basic broadcast frame, and the third indication information is included in the extended broadcast frame. The transceiver unit 1110 receives the basic broadcast frame, and determines, based on the second indication information, that the broadcast type is not the target type, and the transceiver unit 1110 does not receive the extended broadcast frame regardless of content indicated by the first indication information and the third indication information. Further, the scanning request is not initiated. Further, the scanning response is not received. If the processing unit 1120 determines, based on the second indication information, that the broadcast type is the target type, the processing unit 1120 further determines, based on the first indication information, whether to receive the extended broadcast frame. If the first indication information indicates that the content of the extended broadcast frame does not change, the transceiver unit 1110 does not receive the extended broadcast frame. Correspondingly, the transceiver unit 1110 cannot receive the third indication information. The processing unit 1120 initiates the scanning request based on the content of the previously buffered extended broadcast frame and the content of the basic broadcast frame. Further, the scanning response frame is received. If the first indication information indicates that the content of the extended broadcast frame changes, the transceiver unit 1110 receives the extended broadcast frame. Further, the third indication information in the extended broadcast frame is received. If the third indication information indicates that the content of the scanning response frame changes, the processing unit 1120 initiates the scanning request. Further, the scanning response is received. If the third indication information indicates that the content of the scanning response frame does not change, the processing unit 1120 does not initiate the scanning request, or the processing unit 1120 initiates the scanning request but does not receive the scanning response frame.

In some embodiments, the communication apparatus 1100 may be the second device in the foregoing method embodiment 500, or may be a chip configured to implement a function of the second device in the foregoing method embodiment. It should be understood that the communication apparatus 1100 may correspond to steps corresponding to the second device in the method 500 in embodiments of this application. The communication apparatus 1100 includes:
a transceiver unit 1110, configured to send a basic broadcast frame to a first device; and
a processing unit 1120, configured to determine indication information.

When the second device wants to be discovered or connected, the communication apparatus 1100 may send a connectable broadcast message. The first device may discover the communication apparatus 1100 by receiving the broadcast message, and initiate a connection request or initiate a scanning request. Further, the first device establishes a connection to the processing unit 1120, or the first device receives a scanning response frame sent by the transceiver unit 1110. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The first device may periodically receive the basic broadcast frame sent by the transceiver unit 1110.

Specifically, the indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the indication information in the physical layer frame header is shown in FIG. 6. The indication information may be a bit added in the frame header of the basic broadcast frame. It should be understood that the indication information may alternatively be a bit that exists in the frame header of the basic broadcast frame. Optionally, the existing bit is a bit that is temporarily not used. The first device parses the frame header of the basic broadcast frame at a physical layer, so that a parsing difficulty can be reduced, and resources used for parsing can be reduced.

Specifically, the indication information is located in a payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and logical channel priority of a data link layer. A location of the indication information in the payload header of the basic broadcast frame is shown in FIG. 7. The indication information may be a bit added in the payload header of the basic broadcast frame. It should be understood that the indication information may alternatively be a bit that exists in the payload header of the basic broadcast frame. Optionally, the existing bit is a bit that is temporarily not used.

A physical layer processing entity (or module) of the first device parses the physical layer frame header of the basic broadcast frame to obtain the indication information, or a higher layer processing entity (or module) of the first device parses the physical layer payload header of the basic broadcast frame to obtain the indication information.

Specifically, the indication information includes at least one of the following information.

First indication information indicates whether content of the extended broadcast frame changes. For example, the first indication information may include 1 bit, and 0 or 1 is used to indicate whether the content of the extended broadcast frame changes. An indication method is not limited in embodiments of this application.

Second indication information indicates a broadcast type. The broadcast type may include: scannable, connectable, unscannable, or disconnectable. As an example instead of a limitation, the broadcast type indicated by the second indication information may be indicated by using a bit in the second indication information. For example, 2 bits may be used to indicate the broadcast type, where 00 may indicate scannable and connectable, 01 may indicate scannable and disconnectable, 10 indicates unscannable and connectable, and 11 indicates unscannable and disconnectable. An indication method is not limited in embodiments of this application.

Third indication information indicates whether content of the scanning response frame changes. For example, the third indication information may include 1 bit, and 0 or 1 is used to indicate whether the content of the extended broadcast frame changes. An indication method is not limited in embodiments of this application.

In some embodiments, the communication apparatus 1100 may be the first device in the foregoing method embodiment 800, or may be a chip configured to implement a function of the first device in the foregoing method embodiment. It should be understood that the communication apparatus 1100 may correspond to steps corresponding to the first device in the method 800 in embodiments of this application. The communication apparatus 1100 includes:
a transceiver unit 1110, configured to receive a basic broadcast frame sent by a second device; and
a processing unit 1120, configured to parse, at a physical layer, the basic broadcast frame to obtain first indication information.

It should be understood that the communication apparatus is an example of a broadcast receiver, and the second device is an example of a broadcast sender.

When the second device wants to be discovered or connected, the second device may send a connectable broadcast message. The first device may discover the second device by receiving the broadcast message, and initiate a connection request or a scanning request. Further, the first device establishes a connection to the second device, or the first device receives a scanning response frame sent by the second device. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The first device may periodically receive the basic broadcast frame sent by the second device.

Specifically, the first indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the first indication information in the physical layer frame header is shown in FIG. 6. The first indication information may be a bit added in the frame header of the basic broadcast frame. It should be understood that the first indication information may alternatively be a bit that exists in the frame header of the basic broadcast frame. Optionally, the existing bit is a bit that is temporarily not used. The processing unit 1120 parses the frame header of the basic broadcast frame at the physical layer, so that a parsing difficulty can be reduced, and resources used for parsing can be reduced.

Specifically, the first indication information is located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the first indication information in the physical layer payload header of the basic broadcast frame is shown in FIG. 7. The first indication information may be one or more bits added in the physical layer payload header of the basic broadcast frame. It should be understood that the first indication information may alternatively be a bit that exists in the physical layer payload header of the basic broadcast frame. Optionally, the existing bit is a bit that is temporarily not used.

A physical layer processing entity (or module) of the processing unit 1120 parses the physical layer frame header of the basic broadcast frame to obtain the first indication information, or a higher layer processing entity (or module) of the processing unit 1120 parses the physical layer payload header of the basic broadcast frame to obtain the first indication information.

Specifically, the first indication information indicates whether content of the extended broadcast frame changes. For example, the first indication information may include 1 bit, and 0 or 1 is used to indicate whether the content of the extended broadcast frame changes. An indication method is not limited in embodiments of this application.

In some embodiments, the first indication information indicates that the content of the extended broadcast frame changes. Optionally, the first indication information may indicate that the content of the extended broadcast frame changes compared with a previous broadcast.

In some embodiments, the first indication information indicates that the content of the extended broadcast frame does not change. Optionally, the first indication information may indicate that the content of the extended broadcast frame does not change compared with a previous broadcast.

The processing unit 1120 is further configured to determine, based on the first indication information, whether to receive the extended broadcast frame.

Specifically, the transceiver unit 1110 receives the basic broadcast frame, and further obtains, through parsing, the first indication information in the physical layer frame header of the basic broadcast frame or the physical layer payload header of the basic broadcast frame.

In some embodiments, the first indication information indicates that the content of the extended broadcast frame changes. Specifically, a meaning of that the content of the extended broadcast frame changes is similar to the foregoing description. The transceiver unit 1110 receives the extended broadcast frame based on the first indication information.

In some embodiments, the first indication information indicates that the content of the extended broadcast frame does not change. Specifically, a meaning of that the content of the extended broadcast frame does not change is similar to the foregoing description. Correspondingly, the content of the extended broadcast frame does not change, and the processing unit 1120 buffers the content of the extended broadcast frame. In a possible implementation, the transceiver unit 1110 receives, in the previous broadcast, an extended broadcast frame whose content is consistent with the content of the extended broadcast frame. Therefore, the processing unit 1120 buffers the content of the extended broadcast frame. The processing unit 1120 does not receive the extended broadcast frame based on the first indication information.

The processing unit 1120 is further configured to initiate the scanning request or the connection request.

Specifically, the processing unit 1120 determines a start location of a window of the scanning request or the connection request based on the content of the extended broadcast frame that is currently received or previously buffered, and initiates the scanning request or the connection request to the second device at the location.

It should be noted that a broadcast type may be classified into scannable, connectable, unscannable, and disconnectable. In a possible implementation, there are at least the following possible types: connectable and scannable, connectable and unscannable, disconnectable and scannable, and disconnectable and unscannable.

The transceiver unit 1110 receives the scanning response or establishes a connection to the second device.

It should be noted that in the foregoing steps, if the processing unit 1120 initiates the connection request, the second device establishes a connection to the communication apparatus. If the processing unit 1120 initiates the scanning request, the second device sends the scanning response frame to the transceiver unit 1110. The scanning response frame includes more information.

In some embodiments, the transceiver unit 1110 may receive other indication information, and the processing unit 1120 determines a receiving status of a subsequent broadcast message frame based on the first indication information and the other indication information. For detailed descriptions, refer to the communication apparatus corresponding to the method 500.

In some embodiments, the communication apparatus 1100 may be the second device in the foregoing method embodiment 800, or may be a chip configured to implement a function of the second device in the foregoing method embodiment. It should be understood that the communication apparatus 1100 may correspond to steps corresponding to the second device in the method 800 in embodiments of this application. The communication apparatus 1100 includes:
a transceiver unit 1110, configured to send a basic broadcast frame to a first device; and
a processing unit 1120, configured to determine first indication information.

When the second device wants to be discovered or connected, the communication apparatus 1100 may send a connectable broadcast message. The first device may discover the communication apparatus 1100 by receiving the broadcast message, and initiate a connection request or initiate a scanning request. Further, the first device establishes a connection to the processing unit 1120, or the first device receives a scanning response frame sent by the transceiver unit 1110. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The first device may periodically receive the basic broadcast frame sent by the transceiver unit 1110.

Specifically, the first indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the indication information in the physical layer frame header is shown in FIG. 6. The first indication information may be a bit added in the frame header of the basic broadcast frame. It should be understood that the first indication information may alternatively be a bit that exists in the frame header of the basic broadcast frame. Optionally, the existing bit is a bit that is temporarily not used. The first device parses the frame header of the basic broadcast frame at a physical layer, so that a parsing difficulty can be reduced, and resources used for parsing can be reduced.

Specifically, the first indication information is located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the first indication information in the payload header of the basic broadcast frame is shown in FIG. 7. The first indication information may be one or more bits added in the physical layer payload header of the basic broadcast frame. It should be understood that the first indication information may alternatively be a bit that exists in the physical layer payload header of the basic broadcast frame. Optionally, the existing bit is a bit that is temporarily not used.

A physical layer processing entity (or module) of the first device parses the physical layer frame header of the basic broadcast frame to obtain the first indication information, or a higher layer processing entity (or module) of the first device parses the physical layer payload header of the basic broadcast frame to obtain the first indication information.

In some embodiments, the communication apparatus 1100 may be the first device in the foregoing method embodiment 900, or may be a chip configured to implement a function of the first device in the foregoing method embodiment. It should be understood that the communication apparatus 1100 may correspond to steps corresponding to the first device in the method 900 in embodiments of this application. The communication apparatus 1100 includes:
a transceiver unit 1110, configured to receive a basic broadcast frame sent by a second device; and
a processing unit 1120, configured to parse the basic broadcast frame to obtain second indication information.

It should be understood that the communication apparatus is an example of a broadcast receiver, and the second device is an example of a broadcast sender.

When the second device wants to be discovered or connected, the second device may send a connectable broadcast message. The transceiver unit 1110 may discover the second device by receiving the broadcast message, and initiate a connection request or a scanning request. Further, the processing unit 1120 establishes a connection to the second device, or the transceiver unit 1110 receives a scanning response frame sent by the second device. The broadcast message may include two parts: a basic broadcast frame and an extended broadcast frame (or an extended data frame), where the basic broadcast frame is sequentially and repeatedly sent on one or more specified broadcast channels, and the extended broadcast frame may be sent on a data channel different from that of the basic broadcast frame. The transceiver unit 1110 may periodically receive the basic broadcast frame sent by the second device.

Specifically, the second indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the second indication information in the physical layer frame header is shown in FIG. 6. The second indication information may be a bit added in the frame header of the basic broadcast frame. It should be understood that the second indication information may alternatively be a bit that exists in the frame header of the basic broadcast frame. Optionally, the existing bit is a bit that is temporarily not used. The processing unit 1120 parses the frame header of the basic broadcast frame at the physical layer, so that a parsing difficulty can be reduced, and resources used for parsing can be reduced.

Specifically, the second indication information is located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the second indication information in the payload header of the basic broadcast frame is shown in FIG. 7. The second indication information may be a bit added in the payload header of the basic broadcast frame. It should be understood that the second indication information may alternatively be a bit that exists in the payload header of the basic broadcast frame. Optionally, the existing bit is a bit that is temporarily not used.

A physical layer processing entity (or module) of the processing unit 1120 parses the physical layer frame header of the basic broadcast frame to obtain the second indication information, or a higher layer processing entity (or module) of the processing unit 1120 parses the physical layer payload header of the basic broadcast frame to obtain the second indication information.

The second indication information indicates a broadcast type. The broadcast type may include: scannable, unscannable, connectable, or disconnectable. In some embodiments, 2 bits in the second indication information may be used to indicate the broadcast type. For example, 00 may indicate scannable and connectable, 01 may indicate scannable and disconnectable, 10 may indicate unscannable and disconnectable, and 11 may indicate unscannable and disconnectable.

The processing unit 1120 is further configured to determine, based on the second indication information, whether to receive the extended broadcast frame.

Specifically, the transceiver unit 1110 receives the basic broadcast frame, and further parses the second indication information in the physical layer frame header or a payload of the basic broadcast frame.

The processing unit 1120 determines, based on the second indication information, whether the broadcast type is a target type. If the broadcast type is the target type of the first device, the first device receives the extended broadcast frame. If the broadcast type is not the target type of the first device, optionally, the first device does not receive the extended broadcast frame. Optionally, the first device receives the extended broadcast frame, but a subsequent step is not performed.

The processing unit 1120 initiates the scanning request or the connection request.

It should be noted that this step is optional. The processing unit 1120 determines that the broadcast type is the target type, receives the extended broadcast frame, and initiates the scanning request or the connection request to the second device.

The transceiver unit 1110 receives the scanning response frame or the processing unit 1120 establishes a connection to the second device.

It should be noted that this step is optional. If the processing unit 1120 initiates the connection request, the second device establishes a connection to the processing unit 1120. If the processing unit 1120 initiates the scanning request, the second device sends the scanning response frame to the transceiver unit 1110. The scanning response frame includes more information.

In some embodiments, the transceiver unit 1110 may receive other indication information, and the processing unit 1120 determines a receiving status of a subsequent broadcast message frame based on the second indication information and the other indication information. For detailed descriptions, refer to the communication apparatus corresponding to the method 500.

In some embodiments, the communication apparatus 1100 may be the second device in the foregoing method embodiment 900, or may be a chip configured to implement a function of the second device in the foregoing method embodiment. It should be understood that the communication apparatus 1100 may correspond to steps corresponding to the second device in the method 900 in embodiments of this application. The communication apparatus 1100 includes:
a transceiver unit 1110, configured to send a basic broadcast frame to a first device; and
a processing unit 1120, configured to determine second indication information.

When the second device wants to be discovered or connected, the communication apparatus 1100 may send a connectable broadcast message. The first device may discover the communication apparatus 1100 by receiving the broadcast message, and initiate a connection request or initiate a scanning request. Further, the first device establishes a connection to the processing unit 1120, or the first device receives a scanning response frame sent by the transceiver unit 1110. The broadcast message may include two parts: a basic broadcast frame and an extended broadcast frame (or an extended data frame), where the basic broadcast frame is sequentially and repeatedly sent on one or more specified broadcast channels, and the extended broadcast frame may be sent on a data channel different from that of the basic broadcast frame. The first device may periodically receive the basic broadcast frame sent by the transceiver unit 1110.

Specifically, the second indication information is located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the second indication information in the physical layer frame header is shown in FIG. 6. The second indication information may be a bit added in the frame header of the basic broadcast frame. It should be understood that the second indication information may alternatively be a bit that exists in the frame header of the basic broadcast frame. Optionally, the existing bit is a bit that is temporarily not used. The first device parses the frame header of the basic broadcast frame at a physical layer, so that a parsing difficulty can be reduced, and resources used for parsing can be reduced.

Specifically, the second indication information is located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the second indication information in the payload header of the basic broadcast frame is shown in FIG. 7. The second indication information may be a bit added in the payload header of the basic broadcast frame. It should be understood that the second indication information may alternatively be a bit that exists in the payload header of the basic broadcast frame. Optionally, the existing bit is a bit that is temporarily not used.

The second indication information indicates a broadcast type.

In some embodiments, the communication apparatus 1100 may be the first device in the foregoing method embodiment 1000, or may be a chip configured to implement a function of the first device in the foregoing method embodiment. It should be understood that the communication apparatus 1100 may correspond to steps corresponding to the first device in the method 1000 in embodiments of this application. The communication apparatus 1100 includes:
a transceiver unit 1110, configured to receive a basic broadcast frame sent by a second device; and
a processing unit 1120, configured to parse the basic broadcast frame to obtain third indication information.

Specifically, the third indication information may be located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the third indication information in the physical layer frame header is shown in FIG. 6. The third indication information may be a bit added in the frame header of the basic broadcast frame. It should be understood that the third indication information may alternatively be a bit that exists in the frame header of the basic broadcast frame. Optionally, the existing bit is a bit that is temporarily not used. The processing unit 1120 parses the physical layer frame header of the basic broadcast frame, so that a parsing difficulty can be reduced, and resources used for parsing can be reduced.

Specifically, the third indication information may be located in a payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the third indication information in the payload header of the basic broadcast frame is shown in FIG. 7. The third indication information may be one or more bits added in the physical layer payload header of the basic broadcast frame. It should be understood that the third indication information may alternatively be a bit that exists in the physical layer payload header of the basic broadcast frame. Optionally, the existing bit is a bit that is temporarily not used.

A physical layer processing entity (or module) of the processing unit 1120 parses the physical layer frame header of the basic broadcast frame to obtain the third indication information, or a higher layer processing entity (or module) of the processing unit 1120 parses the physical layer payload header of the basic broadcast frame to obtain the third indication information.

The processing unit 1120 is further configured to determine, based on the third indication information, whether to receive the extended broadcast frame.

It should be noted that, if the processing unit 1120 determines, based on the third indication information, that content of the scanning response frame does not change, the transceiver unit 1110 does not need to receive the extended broadcast frame, and does not need to initiate a subsequent procedure. If the processing unit 1120 determines, based on the third indication information, that the content of the scanning response frame changes, the transceiver unit 1110 receives the extended broadcast frame.

The processing unit 1120 is further configured to initiate the scanning request.

It should be noted that this step is optional. If the processing unit 1120 determines, based on the third indication information, that the content of the scanning response frame does not change, the processing unit 1120 does not perform a subsequent procedure. The transceiver unit 1110 does not receive the extended broadcast frame, and does not initiate the scanning request. If the processing unit 1120 determines, based on the third indication information, that the content of the scanning response frame changes, the processing unit 1120 determines that the scanning response frame needs to be received. Correspondingly, the transceiver unit 1110 needs to receive the extended broadcast frame, and initiates the scanning request based on content of the extended broadcast frame and content of the basic broadcast frame.

The transceiver unit 1110 is further configured to receive the scanning response frame.

It should be noted that this step is optional. After initiating the scanning request, the processing unit 1120 receives the scanning response frame.

In some embodiments, the third indication information is included in the frame header or the payload header of the extended broadcast frame. In this embodiment, the transceiver unit 1110 receives the basic broadcast frame, receives the extended broadcast frame based on the content of the basic broadcast frame, and parses, at the physical layer, the extended broadcast frame to obtain the third indication information. If the third indication information indicates that the content of the scanning response frame changes, the processing unit 1120 initiates the scanning request, and receives the scanning response frame from the second device. If the third indication information indicates that the content of the scanning response frame does not change, the processing unit 1120 does not initiate the scanning request, or the processing unit 1120 initiates the scanning request but does not receive the scanning response frame.

In some embodiments, the transceiver unit 1110 may receive other indication information, and the processing unit 1120 determines a receiving status of a subsequent broadcast message frame based on the third indication information and the other indication information. For detailed descriptions, refer to the communication apparatus corresponding to the method 500.

In some embodiments, the communication apparatus 1100 may be the second device in the foregoing method embodiment 1000, or may be a chip configured to implement a function of the second device in the foregoing method embodiment. It should be understood that the communication apparatus 1100 may correspond to steps corresponding to the second device in the method 1000 in embodiments of this application. The communication apparatus 1100 includes:
a transceiver unit 1110, configured to send a basic broadcast frame to a first device; and
a processing unit 1120, configured to determine third indication information.

When the second device wants to be discovered or connected, the communication apparatus 1100 may send a connectable broadcast message. The first device may discover the communication apparatus 1100 by receiving the broadcast message, and initiate a connection request or initiate a scanning request. Further, the first device establishes a connection to the processing unit 1120, or the first device receives a scanning response frame sent by the transceiver unit 1110. The broadcast message may include two parts: a basic broadcast frame and an extended broadcast frame (or an extended data frame), where the basic broadcast frame is sequentially and repeatedly sent on one or more specified broadcast channels, and the extended broadcast frame is sent on a data channel different from that of the basic broadcast frame. The first device may periodically receive the basic broadcast frame sent by the transceiver unit 1110.

Specifically, the third indication information may be located in a physical layer frame header of the basic broadcast frame, and includes one or more bits. The physical layer frame header of the basic broadcast frame may further include physical layer control information such as encoding and decoding of the basic broadcast frame and new transmission and old transmission indications. A location of the third indication information in the physical layer frame header is shown in FIG. 6. The third indication information may be one or more bits added in the frame header of the basic broadcast frame. It should be understood that the third indication information may alternatively be a bit that exists in the frame header of the basic broadcast frame. Optionally, the existing bit is a bit that is temporarily not used. The first device parses the frame header of the basic broadcast frame at a physical layer, so that a parsing difficulty can be reduced, and resources used for parsing can be reduced.

Specifically, the third indication information may be located in a physical layer payload header of the basic broadcast frame, and includes one or more bits. The physical layer payload header of the basic broadcast frame may further include higher layer control information of the basic broadcast frame, for example, one or more pieces of link-layer-related control information such as segmentation, reassembly, multiplexing, and a logical channel priority of a data link layer. A location of the third indication information in the payload header of the basic broadcast frame is shown in FIG. 7. The third indication information may be one or more bits added in the physical layer payload header of the basic broadcast frame. It should be understood that the third indication information may alternatively be a bit that exists in the physical layer payload header of the basic broadcast frame. Optionally, the existing bit is a bit that is temporarily not used.

The third indication information indicates whether content of the scanning response frame changes. For example, the third indication information may include 1 bit, and 0 or 1 is used to indicate whether the content of the extended broadcast frame changes. An indication method is not limited in embodiments of this application.

FIG. 12 is a schematic diagram of a communication apparatus 1200 according to an embodiment of this application. The communication apparatus 1200 includes a transceiver 1210, a processor 1220, and a memory 1230. The memory 1230 is configured to store instructions. The processor 1220 is coupled to the memory 1230, and is configured to execute the instructions stored in the memory, to perform the method provided in embodiments of this application.

Specifically, the transceiver 1210 in the communication apparatus 1200 may correspond to the transceiver unit 1110 in the communication apparatus 1100, and the processor 1220 in the communication apparatus 1200 may correspond to the processing unit 1120 in the communication apparatus 1100.

It should be understood that the memory 1230 and the processor 1220 may be combined into one processing apparatus, and the processor 1220 is configured to execute program code stored in the memory 1230 to implement the foregoing functions. During specific implementation, the memory 1230 may alternatively be integrated into the processor 1220, or may be independent of the processor 1220.

It should be understood that a specific process in which the transceiver and the processor perform the foregoing corresponding steps is described in detail in the foregoing method embodiments. For brevity, details are not described herein.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless short-range broadcast information processing method, comprising:
receiving (S510), by a first device, a basic broadcast frame sent by a second device;
parsing at a physical layer (S520), by the first device, the basic broadcast frame to obtain indication information,
wherein the indication information comprises at least one of the following:
first indication information, wherein the first indication information indicates whether content of an extended broadcast frame changes;
second indication information, wherein the second indication information indicates a broadcast type, the broadcast type being scannable, connectable, unscannable, or disconnectable or a combination thereof; and
third indication information, wherein the third indication information indicates whether content of a scanning response frame changes; and
determining (S530), by the first device based on the indication information, whether to receive the extended broadcast frame,
wherein the basic broadcast frame is sequentially and repeatedly sent on one or more specified broadcast channels, and the extended broadcast frame is sent on a data channel different from that of the basic broadcast frame.

2. The method according to claim 1, wherein the indication information is comprised in a physical layer frame header of the basic broadcast frame, and the parsing (S520), by the first device, the basic broadcast frame to obtain indication information comprises:
parsing, by the first device, the physical layer frame header of the basic broadcast frame; and
obtaining, by the first device, the indication information from the physical layer frame header of the basic broadcast frame.

3. The method according to claim 1, wherein the indication information is comprised in a physical layer payload header of the basic broadcast frame, and the parsing (S520), by the first device, the basic broadcast frame to obtain indication information comprises:
parsing, by the first device, the physical layer payload header of the basic broadcast frame; and
obtaining, by the first device, the indication information from the physical layer payload header of the basic broadcast frame.

4. The method according to any one of claims 1 to 3, wherein when the indication information comprises the first indication information, the determining (S530), by the first device based on the indication information, whether to receive the extended broadcast frame comprises:
determining, by the first device based on the first indication information, that the content of the extended broadcast frame changes, and receiving the extended broadcast frame; or
determining, by the first device based on the first indication information, that the content of the extended broadcast frame does not change, and skipping receiving the extended broadcast frame.

5. The method according to any one of claims 1 to 3, wherein when the indication information comprises the second indication information, the determining (S530), by the first device based on the indication information, whether to receive the extended broadcast frame comprises:
determining, by the first device based on the broadcast type indicated by the second indication information, whether to receive the extended broadcast frame.

6. The method according to any one of claims 1 to 3, wherein when the indication information comprises the third indication information, the determining (S530), by the first device based on the indication information, whether to receive the extended broadcast frame comprises:
determining, by the first device based on the third indication information, that the content of the scanning response frame changes, and receiving the extended broadcast frame; or
determining, by the first device based on the third indication information, that the content of the scanning response frame does not change, and skipping receiving the extended broadcast frame.

7. The method according to any one of claims 1 to 6, wherein the method further comprises:
determining, by the first device, to receive the extended broadcast frame, and receiving, by the first device, the scanning response frame based on the basic broadcast frame and the extended broadcast frame; or
determining, by the first device, not to receive the extended broadcast frame, and receiving, by the first device, the scanning response frame based on the basic broadcast frame.

8. A wireless short-range broadcast information processing method, comprising:
sending (S510), by a second device, a basic broadcast frame to a first device, wherein the basic broadcast frame comprises indication information, the indication information is obtained by the first device by parsing at a physical layer the basic broadcast frame, and the indication information comprises at least one of the following:
first indication information, wherein the first indication information indicates whether content of an extended broadcast frame changes;
second indication information, wherein the second indication information indicates a broadcast type, the broadcast type being scannable, connectable, unscannable, or disconnectable or a combination thereof; and
third indication information, wherein the third indication information indicates whether content of a scanning response frame changes,
wherein the basic broadcast frame is sequentially and repeatedly sent on one or more specified broadcast channels, and the extended broadcast frame is sent on a data channel different from that of the basic broadcast frame.

9. The method according to claim 8, wherein the indication information is comprised in a physical layer frame header of the basic broadcast frame or a physical layer payload header of the basic broadcast frame.

10. An apparatus, configured to perform the method according to any one of claims 1 to 9.

11. A computer-readable storage medium, wherein the computer-readable medium stores computer instructions, and when the computer instructions are run on a computer, the computer is enabled to perform the communication method according to any one of claims 1 to 9.

12. A computer program product, storing a computer program, which, when being run on a computer, enables the computer to perform the method according to any one of claims 1 to 9.

## Patentansprüche

1. Verfahren zur Rundfunkinformationsverarbeitung bei drahtlosen Kurzstrecken, umfassend:
Empfangen (S510) eines von einem zweiten Gerät gesendeten Basis-Rundfunk-Frames durch ein erstes Gerät;
Parsen des Basis-Rundfunk-Frames auf der physikalischen Schicht (S520) durch das erste Gerät, um Anzeigeinformationen zu erhalten, wobei die Anzeigeinformationen mindestens eine der folgenden Informationen umfassen:
erste Anzeigeinformationen, wobei die ersten Anzeigeinformationen angeben, ob sich der Inhalt eines erweiterten Rundfunk-Frames ändert;
zweite Anzeigeinformationen, wobei die zweiten Anzeigeinformationen einen Übertragungstyp angeben, wobei der Übertragungstyp scanbar, verbindbar, nicht scanbar oder trennbar oder eine Kombination davon ist; und
dritte Anzeigeinformationen, wobei die dritten Anzeigeinformationen angeben, ob sich der Inhalt eines Scan-Antwortframes ändert; und
wobei das erste Gerät (S530) basierend auf den Anzeigeinformationen bestimmt, ob der erweiterte Rundfunk-Frame empfangen werden soll,
wobei der Basis-Rundfunk-Frame sequenziell und wiederholt auf einem oder mehreren angegebenen Rundfunk-Kanälen gesendet wird und der erweiterte Rundfunk-Frame auf einem Datenkanal gesendet wird, der sich von dem des Basis-Rundfunk-Frames unterscheidet.

2. Verfahren nach Anspruch 1, wobei die Anzeigeinformationen in einem Frame-Header der physikalischen Schicht des Basis-Rundfunk-Frames enthalten sind, und wobei das Parsen (S520) des Basis-Rundfunk-Frames durch das erste Gerät zum Erhalt von Anzeigeinformationen Folgendes umfasst:
Parsen des Frame-Headers der physikalischen Schicht des Basis-Rundfunk-Frames durch das erste Gerät; und
Erhalt der Anzeigeinformationen durch das erste Gerät aus dem Frame-Header der physikalischen Schicht des Basis-Rundfunk-Frames.

3. Verfahren nach Anspruch 1, wobei die Anzeigeinformationen in einem Nutzlast-Header der physikalischen Schicht des Basis-Rundfunk-Frames enthalten sind, und wobei das Parsen (S520) des Basis-Rundfunk-Frames durch das erste Gerät zum Erhalt von Anzeigeinformationen Folgendes umfasst:
Parsen des Nutzlast-Headers der physikalischen Schicht des Basis-Rundfunk-Frames durch das erste Gerät; und
Erhalt der Anzeigeinformationen durch das erste Gerät aus dem Nutzlast-Header der physikalischen Schicht des Basis-Rundfunk-Frames.

4. Verfahren nach einem der Ansprüche 1 bis 3, wobei, wenn die Anzeigeinformationen die ersten Anzeigeinformationen umfassen, das Bestimmen (S530) durch das erste Gerät basierend auf den Anzeigeinformationen, ob der erweiterte Rundfunk-Frame empfangen werden soll, Folgendes umfasst:
Bestimmen durch das erste Gerät basierend auf den ersten Anzeigeinformationen, dass sich der Inhalt des erweiterten Rundfunk-Frames ändert, und Empfangen des erweiterten Rundfunk-Frames; oder
Bestimmen durch das erste Gerät basierend auf den ersten Anzeigeinformationen, dass sich der Inhalt des erweiterten Rundfunk-Frames nicht ändert, und Auslassen des Empfangs des erweiterten Rundfunk-Frames.

5. Verfahren nach einem der Ansprüche 1 bis 3, wobei, wenn die Anzeigeinformationen die zweiten Anzeigeinformationen umfassen, das Bestimmen (S530) durch das erste Gerät basierend auf den Anzeigeinformationen, ob der erweiterte Rundfunk-Frame empfangen werden soll, Folgendes umfasst:
Bestimmen durch das erste Gerät basierend auf dem durch die zweiten Anzeigeinformationen angegebenen Übertragungstyp, ob der erweiterte Rundfunk-Frame empfangen werden soll.

6. Verfahren nach einem der Ansprüche 1 bis 3, wobei, wenn die Anzeigeinformationen die dritten Anzeigeinformationen umfassen, das Bestimmen (S530) durch das erste Gerät basierend auf den Anzeigeinformationen, ob der erweiterte Rundfunk-Frame empfangen werden soll, Folgendes umfasst:
Bestimmen durch das erste Gerät basierend auf den dritten Anzeigeinformationen, dass sich der Inhalt des Scan-Antwortrahmens ändert, und Empfangen des erweiterten Rundfunk-Frames; oder
Bestimmen durch das erste Gerät basierend auf den dritten Anzeigeinformationen, dass sich der Inhalt des Scan-Antwortrahmens nicht ändert, und Auslassen des Empfangs des erweiterten Rundfunk-Frames.

7. Verfahren nach einem der Ansprüche 1 bis 6, wobei das Verfahren ferner Folgendes umfasst:
Bestimmen durch das erste Gerät, dass der erweiterte Rundfunk-Frame empfangen werden soll, und Empfangen des Scan-Antwortrahmens durch das erste Gerät basierend auf dem Basis-Rundfunk-Frame und dem erweiterten Rundfunk-Frame; oder
Bestimmen durch das erste Gerät, dass der erweiterte Rundfunk-Frame nicht empfangen werden soll, und Empfangen des Scan-Antwortrahmens durch das erste Gerät basierend auf dem Basis-Rundfunk-Frame.

8. Verfahren zur Informationsverarbeitung bei drahtloser Kurzstreckenübertragung, umfassend:
Senden (S510) eines Basis-Rundfunk-Frames durch ein zweites Gerät an ein erstes Gerät, wobei der Basis-Rundfunk-Frame Anzeigeinformationen umfasst, wobei die Anzeigeinformationen vom ersten Gerät durch Parsen des Basis-Rundfunk-Frames auf der physikalischen Schicht erhalten werden und die Anzeigeinformationen mindestens eine der folgenden Informationen umfassen:
erste Anzeigeinformationen, wobei die ersten Anzeigeinformationen angeben, ob sich der Inhalt eines erweiterten Rundfunk-Frames ändert;
zweite Anzeigeinformationen, wobei die zweiten Anzeigeinformationen einen Übertragungstyp angeben, wobei der Übertragungstyp scanbar, verbindbar, nicht scanbar oder trennbar oder eine Kombination davon ist; und
dritte Anzeigeinformationen, wobei die dritten Anzeigeinformationen angeben, ob sich der Inhalt eines Scan-Antwortrahmens ändert,
wobei der Basis-Rundfunk-Frame sequenziell und wiederholt auf einem oder mehreren angegebenen Rundfunk-Kanälen gesendet wird und der erweiterte Rundfunk-Frame auf einem Datenkanal gesendet wird, der sich von dem des Basis-Rundfunk-Frames unterscheidet.

9. Verfahren nach Anspruch 8, wobei die Anzeigeinformationen in einem Frame-Header der physikalischen Schicht des Basis-Rundfunk-Frames oder in einem Nutzlast-Header der physikalischen Schicht des Basis-Rundfunk-Frames enthalten sind.

10. Vorrichtung, die dazu konfiguriert ist, das Verfahren nach einem der Ansprüche 1 bis 9 durchzuführen.

11. Computerlesbares Speichermedium, wobei das computerlesbare Speichermedium Computeranweisungen umfasst und, wenn die Computeranweisungen auf einem Computer ausgeführt werden, der Computer dazu veranlasst wird, das Verfahren nach einem der Ansprüche 1 bis 9 durchzuführen.

12. Computerprogrammprodukt, das ein Computerprogramm speichert, wobei das Computerprogramm, wenn es auf einem Computer ausgeführt wird, den Computer dazu veranlasst, das Verfahren nach einem der Ansprüche 1 bis 9 durchzuführen.

## Revendications

1. Procédé de traitement d'informations de diffusion sans fil à courte portée, comprenant :
la réception (S510), par un premier dispositif, d'une trame de diffusion de base envoyée par un second dispositif ;
l'analyse au niveau d'une couche physique (S520), par le premier dispositif, de la trame de diffusion de base pour obtenir des informations d'indication, dans lequel les informations d'indication comprennent au moins l'un des éléments suivants :
des premières informations d'indication, dans lequel les premières informations d'indication indiquent si le contenu d'une trame de diffusion prolongée change ;
des deuxièmes informations d'indication, dans lequel les deuxièmes informations d'indication indiquent un type de diffusion, le type de diffusion pouvant être balayé, connecté, non balayé ou déconnecté ou une combinaison de ceux-ci ; et
des troisièmes informations d'indication, dans lequel les troisièmes informations d'indication indiquent si le contenu d'une trame de réponse de balayage change ; et
le fait de déterminer (S530), par le premier dispositif sur la base des informations d'indication, s'il faut recevoir la trame de diffusion prolongée,
dans lequel la trame de diffusion de base est envoyée de manière séquentielle et répétée sur un ou plusieurs canaux de diffusion spécifiés, et la trame de diffusion prolongée est envoyée sur un canal de données différent de celui de la trame de diffusion de base.

2. Procédé selon la revendication 1, dans lequel les informations d'indication sont comprises dans un en-tête de trame de couche physique de la trame de diffusion de base, et l'analyse (S520), par le premier dispositif, de la trame de diffusion de base pour obtenir les informations d'indication comprend :
l'analyse, par le premier dispositif, de l'en-tête de trame de couche physique de la trame de diffusion de base ; et
l'obtention, par le premier dispositif, des informations d'indication à partir de l'en-tête de trame de couche physique de la trame de diffusion de base.

3. Procédé selon la revendication 1, dans lequel les informations d'indication sont comprises dans un en-tête de charge utile de couche physique de la trame de diffusion de base, et l'analyse (S520), par le premier dispositif, de la trame de diffusion de base pour obtenir les informations d'indication comprend :
l'analyse, par le premier dispositif, de l'en-tête de charge utile de couche physique de la trame de diffusion de base ; et
l'obtention, par le premier dispositif, des informations d'indication à partir de l'en-tête de charge utile de couche physique de la trame de diffusion de base.

4. Procédé selon l'une quelconque des revendications 1 à 3, dans lequel, lorsque les informations d'indication comprennent les premières informations d'indication, le fait de déterminer (S530), par le premier dispositif sur la base des informations d'indication, s'il faut recevoir la trame de diffusion prolongée comprend :
la détermination, par le premier dispositif sur la base des premières informations d'indication, selon laquelle le contenu de la trame de diffusion prolongée change, et la réception de la trame de diffusion prolongée ; ou
la détermination, par le premier dispositif sur la base des premières informations d'indication, selon laquelle le contenu de la trame de diffusion prolongée ne change pas, et le fait d'ignorer la réception de la trame de diffusion prolongée.

5. Procédé selon l'une quelconque des revendications 1 à 3, dans lequel, lorsque les informations d'indication comprennent les deuxièmes informations d'indication, le fait de déterminer (S530), par le premier dispositif sur la base des informations d'indication, s'il faut recevoir la trame de diffusion prolongée comprend :
le fait de déterminer, par le premier dispositif sur la base du type de diffusion indiqué par les deuxièmes informations d'indication, s'il faut recevoir la trame de diffusion prolongée.

6. Procédé selon l'une quelconque des revendications 1 à 3, dans lequel, lorsque les informations d'indication comprennent les troisièmes informations d'indication, le fait de déterminer (S530), par le premier dispositif sur la base des informations d'indication, s'il faut recevoir la trame de diffusion prolongée comprend :
la détermination, par le premier dispositif sur la base des troisièmes informations d'indication, que le contenu de la trame de réponse de balayage change, et la réception de la trame de diffusion prolongée ; ou
la détermination, par le premier dispositif sur la base des troisièmes informations d'indication, que le contenu de la trame de réponse de balayage ne change pas, et le fait d'ignorer la réception de la trame de diffusion prolongée.

7. Procédé selon l'une quelconque des revendications 1 à 6, dans lequel le procédé comprend également :
la détermination, par le premier dispositif, de recevoir la trame de diffusion prolongée, et la réception, par le premier dispositif, de la trame de réponse de balayage sur la base de la trame de diffusion de base et de la trame de diffusion prolongée ; ou
la détermination, par le premier dispositif, de ne pas recevoir la trame de diffusion prolongée, et la réception, par le premier dispositif, de la trame de réponse de balayage sur la base de la trame de diffusion de base.

8. Procédé de traitement d'informations de diffusion sans fil à courte portée, comprenant :
l'envoi (S510), par un second dispositif, d'une trame de diffusion de base à un premier dispositif, dans lequel la trame de diffusion de base comprend des informations d'indication, les informations d'indication sont obtenues par le premier dispositif en analysant, au niveau d'une couche physique, la trame de diffusion de base, et les informations d'indication comprennent au moins l'un des éléments suivants :
des premières informations d'indication, dans lequel les premières informations d'indication indiquent si le contenu d'une trame de diffusion prolongée change ;
des deuxièmes informations d'indication, dans lequel les deuxièmes informations d'indication indiquent un type de diffusion, le type de diffusion pouvant être balayé, connecté, non balayé ou déconnecté ou une combinaison de ceux-ci ; et
des troisièmes informations d'indication, dans lequel les troisièmes informations d'indication indiquent si le contenu d'une trame de réponse de balayage change,
dans lequel la trame de diffusion de base est envoyée de manière séquentielle et répétée sur un ou plusieurs canaux de diffusion spécifiés, et la trame de diffusion prolongée est envoyée sur un canal de données différent de celui de la trame de diffusion de base.

9. Procédé selon la revendication 8, dans lequel les informations d'indication sont comprises dans un en-tête de trame de couche physique de la trame de diffusion de base ou un en-tête de charge utile de couche physique de la trame de diffusion de base.

10. Appareil configuré pour réaliser le procédé selon l'une quelconque des revendications 1 à 9.

11. Support de stockage lisible par ordinateur, dans lequel le support lisible par ordinateur stocke des instructions informatiques, et lorsque les instructions informatiques sont exécutées sur un ordinateur, l'ordinateur est activé pour réaliser le procédé de communication selon l'une quelconque des revendications 1 à 9.

12. Produit de programme informatique, stockant un programme informatique qui, lorsqu'il est exécuté sur un ordinateur, l'ordinateur est activé pour réaliser le procédé selon l'une quelconque des revendications 1 à 9.
